# EUROPÄISCHE PATENTSCHRIFT

(11) **EP 2 452 055 B1**
(45) Veröffentlichungstag und Bekanntmachung des Hinweises auf die Patenterteilung: **06.11.2013**
(21) Anmeldenummer: 10725041.7
(22) Anmeldetag: 11.06.2010
(51) Int. Cl.: F01N 3/023, F01N 3/025, F01N 3/20, F01N 9/00

(54) **VERFAHREN UND VORRICHTUNG ZUR REGENERATION EINES IM ABGASTRAKT EINER BRENNKRAFTMASCHINE ANGEORDNETEN PARTIKELFILTERS**
METHOD AND APPARATUS TO REGENERATE A PARTICLE FILTER IN AN EXHAUST GAS LINE OF A COMBUSTION ENGINE
PROCEDE ET DISPOSITIF POUR LA REGENERATION D'UN FILTRE A PARTICULE DANS UNE LIGNE D'ECHAPPEMENT D'UN MOTEUR A COMBUSTION

(30) Priorität: 07.07.2009 DE 102009032022
(43) Veröffentlichungstag der Anmeldung: 16.05.2012
(73) Patentinhaber: MAN Truck & Bus AG, 80995 München (DE)
(72) Erfinder: Döring, Andreas, 82008 München (DE); Rothe, Dieter, 90403 Nürnberg (DE)
(74) Vertreter: Liebl, Thomas
(86) Internationale Anmeldenummer: PCT/EP2010/003514
(87) Internationale Veröffentlichungsnummer: WO 2011/003497

(56) Entgegenhaltungen:
- EP-A1- 1 892 394
- EP-A2- 1 990 511
- WO-A1-02/48512
- WO-A1-2008/131573
- WO-A1-2009/014275
- FR-A1- 2 850 704
- JP-A- 2003 013 730

## Beschreibung

Die Erfindung betrifft ein Verfahren zur Regeneration eines im Abgastrakt einer Brennkraftmaschine angeordneten Partikelfilters nach dem Oberbegriff des Anspruches 1.

Insbesondere betrifft die Erfindung ein Verfahren und eine Vorrichtung zur Regeneration von Partikelfiltern bei mit Luftüberschuss betriebenen Brennkraftmaschinen, wie Dieselmotoren oder Benzinmotoren mit Direkteinspritzung, wie sie beispielsweise in Kraftfahrzeugen oder Nutzfahrzeugen zum Einsatz gelangen.

Zur Minimierung der kohlenstoffhaltigen Feinstoffpartikel werden in Fahrzeugen üblicherweise sogenannte Partikelabscheider oder Partikelfilter eingesetzt. Eine typische Partikelabscheider-Anordnung in Fahrzeugen ist beispielsweise aus der EP 10 727 65 A2 bekannt. Derartige Partikelabscheider unterscheiden sich von den Partikelfiltern dadurch, dass der Abgasstrom entlang der Abscheidestrukturen geführt wird, während bei Partikelfiltern das Abgas durch das Filtermedium hindurchströmen muss. Infolge dieses Unterschiedes neigen Partikelfilter zur Verstopfung, was den Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat. Ein Beispiel für eine derartige Partikelfilter-Anordnung ist aus der EP 03 418 32 A2 bekannt.

Bei beiden vorstehend beschriebenen Anordnungen oxidiert jeweils ein stromauf des Partikelabscheiders bzw. des Partikelfilters angeordneter Oxidationskatalysator des Stickstoffmonoxid (NO) im Abgas mit Hilfe des ebenfalls enthaltenen Restsauerstoffes (O₂) zu Stickstoffdioxid (NO₂), und zwar gemäß folgender Gleichung:

2 NO + O₂ <-> 2 NO₂ (1)

Dabei ist zu beachten, dass das Gleichgewicht der obigen Reaktion bei hohen Temperaturen auf der Seite von NO liegt. Dies hat wiederum zur Folge, dass die erzielbaren NO₂-Anteile bei hohen Temperaturen aufgrund dieser thermodynamischen Begrenzung limitiert sind.

Das NO₂ setzt sich wiederum im Partikelfilter mit den kohlenstoffhaltigen Feinstpartikeln zu CO, CO₂, N₂ und NO um. Mit Hilfe des starken Oxidationsmittels NO₂ erfolgt somit eine kontinuierliche Entfernung der angelagerten Feinstoffpartikel, so dass Regenerationszyklen, wie sie aufwendig bei anderen Anordnungen durchgeführt werden müssen, entfallen können. Man spricht in diesem Zusammenhang von einer passiven Regeneration, gemäß nachstehender Gleichungen:

C + 2 NO₂ -> 2 NO + CO₂ (2)

NO₂ + C -> NO + CO (3)

Die Bildung von Kohlenmonoxid nach Gleichung (3) spielt dabei eine nur untergeordnete Rolle, meist findet eine komplette Oxidation des Kohlenstoffs bis zur Oxidationsstufe +4, in Form von Kohlendioxid, statt, wobei für diese Oxidation pro Kohlenstoffmolekül zwei NO₂-Moleküle benötigt werden.

Neben NO₂ wird an den platinhaltigen NO-Oxidationskatalysatoren auch SO₂, aus im Kraftstoff- und/oder Motorenöl enthaltenem Schwefel gebildet. Das SO₃ und NO₂ kondensieren an kalten Stellen im Abgastrakt zu hochkorrosiver Schwefel- bzw. Salpetersäure, so dass die Abgasanlage bis zu den Partikelfiltern in Edelstahl ausgeführt werden muss, um eine Korrosion zu vermeiden.

Gelingt keine vollständige Oxidation des im Partikelfilter eingelagerten Kohlenstoffs mit Hilfe von NO₂, so steigen der Kohlenstoffanteil im Filter und damit der Abgasgegendruck stetig an. Um dies zu vermeiden, werden aktuell die Partikelfilter vermehrt mit einer katalytischen Beschichtung zur Oxidation von NO versehen (EP 03 418 32 A2). Dabei handelt es sich konkret um platinhaltige Katalysatoren. Der Nachteil dieses Verfahrens besteht jedoch darin, dass das am Partikelfilter gebildete NO₂ nur zur Oxidation von Partikeln dienen kann, die stromab der katalytisch aktiven Schicht zur NO-Oxidation abgeschieden wurden, das heißt somit innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der partikelfilterseitige NO-Oxidationskatalysator stromab des Filterkuchens, so dass die dort abgeschiedenen Rußpartikel nicht mit Hilfe von NO₂ aus dem, auf dem Partikelfilter aufgebrachten NO-Oxidationskatalysator oxidiert werden können. Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters besteht darin, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß und Motorölasche einzulagern. Werden keramische Filtersubstrate eingesetzt, wird dies durch eine geringe Zelldichte von 50cpsi bis 200cpsi realisiert. Demgegenüber werden reine Katalysatoren üblicherweise mit Zelldichten von 400cpsi bis 900cpsi ausgeführt. Durch die Anhebung von 50cpsi auf 900cpsi ergibt sich eine Erhöhung der geometrischen Oberfläche von 1m²/l auf 4m²/l, wodurch erhebliche Umsatzsteigerungen an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, in dem der Eintrittsbereich des Partikelfilters als NO-Oxidationskatalysator ausgeführt ist, wie dies beispielsweise bei der DE 103 270 30 A1 beschrieben ist.

Bei all diesen Varianten zur passiven Regeneration über NO₂ ist zu beachten, dass die Rußoxidation unterhalb von 200°C bis 230°C auch durch eine Anhebung der NO₂-Mengen nicht weiter gesteigert werden kann. Bei ca. 370°C wird das Umsatzmaximum erreicht. Ab dieser Temperatur läuft die Rußoxidation nach der oben beschriebenen Reaktion (2) ab, das heißt, zwei NO₂-Moleküle reagieren mit einem Kohlenstoffmolekül. Dies bedeutet in Massen, dass mit einem Gramm NO₂ 0,13g Kohlenstoff oxidiert werden können, was wiederum bedeutet, dass sich die oxidierte Rußmenge oberhalb von 230°C durch Anheben der NO₂-Menge erhöhen lässt.

Liegen die Temperaturen unterhalb von 200°C bis 230°C kann dagegen selbst durch das Erhöhen der NO₂-Mengen keine Verbesserung der Rußoxidation und damit keine sichere Funktion des Partikelfilters sichergestellt werden. Dies tritt üblicherweise bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auf. Daher wird speziell in solchen Fällen eine zweite Möglichkeit der Partikelfilterregeneration angewendet, bei der die Abgastemperatur aktiv angehoben wird. Dies geschieht üblicherweise durch die Zugabe von Kohlenwasserstoffen (HC) stromauf von Katalysatoren, insbesondere stromauf von HC-Oxidationskatalysatoren. Aufgrund der Exothermie der Oxidation der zugegebenen Kohlenwasserstoffe mit Hilfe der Katalysatoren wird ein deutlicher Temperaturanstieg erreicht:

"HC" + O₂ -> CO + H₂O (4)

"HC" + O₂ -> CO₂ + H₂O (5)

Um diese Katalysatoren ausreichend thermisch zu stabilisieren, enthalten diese als Aktivkomponenten meist Palladium. Palladium besitzt keine NO-Oxidationsaktivität und verringert zudem die NO-Oxidationsaktivität von eventuell in den Katalysatoren enthaltenem Platin. Dies hat zur Folge, dass HC-Oxidationskatalysatoren eine deutlich geringere NO-Oxidationsaktivität aufweisen, als reine NO-Oxidationskatalysatoren.

Gelingt durch die Zudosierung von Kohlenwasserstoffen eine Temperaturanhebung auf über 600°C, kommt es zu einer Oxidation bzw. zum Abbrennen des im Partikelfilter abgeschiedenen Kohlenstoffs mit Hilfe von Sauerstoff, gemäß nachstehender Gleichungen:

C + O₂ -> CO₂ (6)

2C + O₂ -> 2CO (7)

Allerdings besteht bei dieser sogenannten aktiven Filterregeneration, auch als HCl-Verfahren (Hydro Carbon Injection) bezeichnet, die Gefahr, dass es durch das exotherme Abbrennen des kohlenstoffhaltigen Rußes zu einem starken Temperaturanstieg auf bis zu 1000°C und damit zur Schädigung des Partikelfilters und/oder nachgeschalteter Katalysatoren kommen kann. Da zudem die Temperaturerhöhung für mehrere Minuten aufrecht erhalten werden muss, um eine quantitative Oxidation der Rußpartikel sicherzustellen, ist der Bedarf an Kohlenwasserstoffen nicht unerheblich und verschlechtert den Wirkungsgrad der Brennkraftmaschine, da üblicherweise als Kohlenwasserstoffquelle der Kraftstoff verwendet wird.

Ein weiteres Problem stellen, im Gegensatz zur passiven Regeneration, die hohen Kohlenmonoxidemissionen während der Regeneration dar, deren Bildung in Gleichung (7) beschrieben ist. Aus diesem Grund muss auf dem Partikelfilter und/oder stromab des Partikelfilters ein weiterer Katalysator zur Oxidation des während der Regeneration gebildeten Kohlenmonoxids angebracht werden, um dessen Austritt in die Umwelt zu vermeiden.

Eine einfache Kombination der passiven und aktiven Regeneration, indem Kohlenwasserstoffe vor NO-Oxidationskatalysatoren zugegeben werden, ist nicht zielführend:

Durch die Temperaturanhebung auf über 600°C wird an den NO-OxidationsKatalysatoren aufgrund der thermodynamischen Begrenzung kaum mehr NO₂ gebildet. Zudem wird die Oxidation von NO durch die hohen Mengen an Kohlenwasserstoffen behindert, wodurch es zur starken Verminderung der NO₂-Bildung kommt. Dies führt dazu, dass die Partikel allein mit Hilfe von Sauerstoff oxidiert werden müssen, da in dieser Phase kein NO₂ zur Verfügung steht, was die Regenerationszeit verlängert und zu hohen Kohlenmonoxidemissionen führt.

Gleichzeitig sind die NO-Oxidationskatalysatoren gegenüber thermischer Schädigung weit weniger stabil als Katalysatoren zur Kohlenwasserstoffoxidation, da es bei Temperaturen über 550°C zu einer irreversiblen Sinterung der Aktivkomponenten und damit einem Rückgang der NO-Oxidationsaktivität kommt.

Aus der EP 1 892 394 A1 ist es bekannt, dass ein Abgasteilstrom stromauf eines Oxidationskatalysators abgezweigt und stromab des Oxidationskatalysators wieder zugeführt wird, wobei im abgezweigten Abgasstrom ein Hydrolysekatalysator angeordnet ist, dem eine wässrige Harnstofflösung zugeführt wird. Mit einem derartigen System sollen sowohl die Partikelemissionen als auch die Stickoxidemissionen reduziert werden. Dabei sollen die Abgastemperatur und der Gehalt an Stickstoffdioxid an den Vorrichtungen zur Abscheidung von Partikeln mit Hilfe einer Verstellung von Motorparametern und/oder durch Zuführung von Kohlenwasserstoffen in den Abgasstrom stromauf der Katalysatoren verändert werden.

Es ist daher Aufgabe der vorliegenden Erfindung, ein Verfahren zur Regeneration eines im Abgastrakt einer Brennkraftmaschine angeordneten Partikelfilters zur Verfügung zu stellen, mittels dem bzw. der auf baulich und kompakte Weise eine funktionssichere und zuverlässige Partikel-filter-Regeneration erzielt werden kann.

Diese Aufgabe wird bezüglich des Verfahrens gelöst mit den Merkmalen des Patentanspruchs 1. Vorteilhafte Ausgestaltungen hierzu sind Gegenstand der darauf rückbezogenen Unteransprüche.

Erfindungsgemäß ist vorgesehen, dass die thermische Energie unmittelbar oder aber auch mittelbar von der wenigstens einen Heizeinrichtung ausgekoppelt wird. Alternativ oder zusätzlich dazu kann weiter erfindungsgemäß aber auch vorgesehen sein, dass die thermische Energie aus einem heißen Abgasstrom stromab einer Heizeinrichtung ausgekoppelt wird.

Die thermische Energie wird dann dem NO-Oxidationskatalysator unmittelbar oder mittelbar zugeführt werden. Alternativ oder zusätzlich dazu kann die thermische Energie aber auch stromauf des NO-Oxidationskatalysators in einen den NO-Oxidationskatalysator durchströmenden Abgasstrom eingekuppelt werden.

Der Temperaturbereich wird gemäß einer besonders bevorzugten Ausgestaltung der vorliegenden Erfindung insbesondere in Abhängigkeit von einem Beladungsgrad des Partikelfilters mit Ruß und/oder von einem Wirkungsgrad einer NO₂-basierten Regeneration des Partikelfilters mittels einer am wenigstens einen NO-Oxidationskatalysator gebildeten NO₂-Menge vorgegeben. Dadurch wird somit mit Hilfe einer Heizeinrichtung, insbesondere mit Hilfe eines Heizkatalysators, ein NO-Oxidationskatalysator derart erwärmt, dass er sich in einem für die Bildung von NO optimalen Temperaturfenster befindet. Dieses Temperaturfenster reicht typischerweise von 250° bis 380°C.

Um eine sichere Regeneration des Partikelfilters bzw. Partikelabscheiders sicherzustellen, ist gemäß einer besonders bevorzugten Ausführungsform vorgesehen, dass wenigstens während eines definierten Regenerationsbetriebes das Massenverhältnis zwischen dem im Abgas enthaltenen Kohlenstoff und Stickstoffdioxid mindestens 1:4, bevorzugt mindestens 1:8, beträgt. Dieser Regenerationsbetrieb ist insbesondere durch eine definierte Anhebung der Abgastemperatur stromauf des Partikelfilters gekennzeichnet.

Die Heizeinrichtung wird bevorzugt durch einen Heizkatalysator, insbesondere durch wenigstens einen Katalysator zur Oxidation von Kohlenwasserstoffen gebildet, wobei die Kohlenwasserstoffe zum Beispiel stromauf des Katalysators mittels einer separaten Zudosiereinrichtung zudosiert werden können oder aber auch durch Verstellen von Betriebsparametern von Zylindern der Brennkraftmaschine, wie dies nachfolgend noch näher erörtert wird, zugegeben werden können.

Gemäß einer ersten konkreten Ausführungsform und Verfahrensführung ist dabei die Heizeinrichtung bevorzugt strömungstechnisch parallel zu dem NO-Oxidationskatalysator angeordnet. Beispielsweise sind diese strömungstechnisch so entkoppelt, dass die Heizeinrichtung und der NO-Oxidationskatalysator jeweils von einem Abgas- bzw. Gasstrom durchströmt werden. Konkret bedeutet dies, dass zum Beispiel den NO-Oxidationskatalysator ein erster Abgasstrom und durch oder über die Heizeinrichtung ein zweiter Abgasstrom strömt. Hierbei ist bevorzugt vorgesehen, dass die beiden Abgasströme stromab des NO-Oxidationskatalysators und der wenigstens einen Heizeinrichtung sowie stromauf des Partikelfilters zusammengeführt werden. Die Zuführung des mittels der wenigstens einen Heizeinrichtung aufgeheizten Abgasstroms stromab des NO-Oxidationskatalysators erfolgt insbesondere in Verbindung mit solchen Anwendungsfällen, bei denen der NO-Oxidationskatalysator ohne weiteres auf einem für einen optimalen Betrieb gewünschten Temperaturniveau gehalten werden kann bzw. in solchen Fällen, bei denen die Gefahr besteht, dass die mittels des NO-Oxidationskatalysators produzierte NO₂-Menge aufgrund einer zu hohen Temperatur des NO-Oxidationskatalysators gegebenenfalls sogar wieder rückläufig werden könnte. Andererseits besteht hier bei dieser stromab des NO-Oxidationskatalysators erfolgenden Zuführung des aufgeheizten Abgasstroms der Vorteil, dass dieser aufgeheizte Abgasstrom dem Partikelfilter mit einem unverändert hohen Temperaturniveau zugeführt werden kann.

Grundsätzlich wäre jedoch auch, zum Beispiel in Verbindung mit solchen Einsatzfällen, in denen die Temperatur des NO-Oxidationskatalysators abzufallen droht, eine zusätzliche oder alternative Zuführung des mittels der wenigstens einen Heizeinrichtung aufgeheizten Abgasstroms stromauf des NO-Oxidationskatalysators möglich. Letzteres könnte zum Beispiel mittels einer Abgasturboladeranordnung der Fall sein, was nachfolgend noch näher diskutiert wird:

In Verbindung mit dem Einsatz einer Abgasturboladeranordnung ist es besonders vorteilhaft, dass der wenigstens zeitweise über die Heizeinrichtung geleitete Abgasstrom stromauf wenigstens einer Abgasturbine entnommen und einem Abgasstrom stromab der Abgasturbine sowie bevorzugt stromauf des NO-Oxidationskatalysators zugeführt wird, da hierdurch dann sichergestellt wird, dass der stromab der Abgasturbine ein niedrigeres Temperaturniveau aufweisende Abgasstrom mit dem stromauf der Abgasturbine entnommenen und ein demgegenüber deutlich höheres Temperaturniveau aufweisenden Abgasstrom vermischt wird, wodurch auf einfache Weise sichergestellt werden kann, dass der NO-Oxidationskatalysator in einem gewünschten Temperaturbereich betrieben werden kann, was sich vorteilhaft auf die NO₂-Produktion auswirkt.

Grundsätzlich besteht jedoch auch in Verbindung mit einer derartigen Abgasturbine die Möglichkeit, den von der wenigstens einen Heizeinrichtung aufgeheizten Abgasstrom stromab des NO-Oxidationskatalysators zuzuführen, und zwar alternativ oder zusätzlich zu der Stromauf-Zuführung; dies kann zum Beispiel der Fall sein, wenn, wie zuvor geschildert, ein ausreichendes Temperaturniveau zum Betreiben des NO-Oxidationskatalysators sichergestellt werden kann bzw. gegebenenfalls im Abgasstrom bzw. im Abgasstrang ein solches Temperaturniveau herrscht, dass gegebenenfalls die Gefahr besteht, dass die NO₂-Produktion des NO-OxidationsKatalysators bei zu hohen Temperaturen rückläufig wäre.

Gemäß einer ersten Ausführungsvariante können die beiden Abgasströme sowohl bei der Ausführung mit als auch ohne Abgasturboladeranordnung strömungstechnisch mit unterschiedlichen Zylindern der Brennkraftmaschine verbunden sein. Dadurch können auf einfache Weise durch Verstellen von Betriebsparametern derjenigen Zylinder, die strömungstechnisch mit dem Abgasstrom verbunden sind, der durch einen Katalysator mit Kohlenwasserstoffaktivität als Heizeinrichtung strömt, hohe Kohlenwasserstoffmengen stromauf dieses Katalysators erzeugt werden. Als Betriebsparameter können insbesondere Einspritzzeitpunkt und/oder Einspritzdruck und/oder Anzahl der Einspritzungen und/oder Saugdrosselstellung verstellt bzw. variiert werden.

Alternativ hierzu kann der eine Abgasstrom stromauf des NO-Oxidationskatalysators bzw. stromauf wenigstens einer Abgasturbine aber auch mittels einer Abzweigleitung von einer einen Hauptabgasstrom führenden und zum NO-Oxidationskatalysator geführten Zuführleitung abgezweigt werden, so dass der erste Abgasstrom über die Zuführleitung weiter zum NO-Oxidationskatalysator strömt.

Die in Verbindung mit solchen Ausführungsformen bevorzugten thermischen Kopplungsmöglichkeiten zur Übertragung von thermischer Energie von der Heizeinrichtung an den NO-Oxidationskatalysator werden nachfolgend beispielhaft im Detail näher dargestellt:

Gemäß einer ersten bevorzugten konkreten Verfahrensführung, wird die thermische Energie aus dem heißen Abgasstrom stromab der Heizeinrichtung mittels wenigstens eines Wärmetauschers ausgekoppelt. Insbesondere in diesem Fall bietet es sich auch an, die thermische Energie in den, den NO-Oxidationskatalysator durchströmenden Abgasstrom über wenigstens einen Wärmetauscher einzukoppeln. Dies kann auf bauteiltechnisch einfache und funktionssichere Weise mit einem guten Wirkungsgrad für die Wärmeübertragung erfolgen.

Alternativ oder zusätzlich dazu kann gemäß einer weitere vorteilhaften Ausgestaltung vorgesehen sein, dass die thermische Energie aus dem heißen Abgasstrom stromab der Heizeinrichtung durch Abzweigung eines heißen Abgas-Teilstroms ausgekoppelt wird. In diesem Fall kann dann die thermische Energie stromauf des NO-Oxidationskatalysators durch Einleitung eines heißen Abgasstroms in den zum NO-Oxidationskatalysator geführten Abgasstrom eingekoppelt werden, wobei ferner in einer weiteren Ausgestaltungsvariante vorgesehen sein kann, den abgezweigten Abgas-Teilstrom, vor dessen Zuführung in den zum NO-OxidationsKatalysator geführten Abgasstrom, über einen HC-Oxidationskatalysator zu führen, um gegebenenfalls im abgezweigten Abgasstrom noch vorhandene Kohlenwasserstoff zu entfernen bzw. zu oxidieren. Bei der zuvor beschriebenen Ausführungsvariante, bei der ein heißer Abgas-Teilstrom abgezweigt wird, kann dann gegebenenfalls auch auf den Einsatz eines Wärmetauschers verzichtet werden. Bei einer Ausbildung der Heizeinrichtung als HC-Oxidationskatalysator, dem Kohlenwasserstoffe (HC) als Reduktionsmittel zugeführt werden, ist jedoch bei dieser Ausführungsvariante darauf zu achten, dass der Anteil an Kohlenwasserstoffen stromauf des NO-Oxidationskatalysators gering bleibt, um die NO-Oxidation nicht zu behindern. Daher ist es sinnvoll, nicht nur nach der Soll-Temperatur am NO-Oxidationskatalysator, sondern gegebenenfalls zusätzlich oder alternativ auch nach der HC-Menge vor dem NO-Oxidationskatalysator zu steuern oder zu regeln.

Zusätzlich, aber insbesondere alternativ zu dieser eben aufgezeigten direkten Zuführung des heißen Abgasstrom zum zum NO-Oxidationskatalysator strömenden Abgasstrom kann auch vorgesehen werden, dass der stromab der Heizeinrichtung abgezweigte heiße Abgas-Teilstrom lediglich thermisch an den NO-Oxidationskatalysator, zum Beispiel dessen Gehäuse, und/oder die zu diesem geführte Abgasteilung angekoppelt wird, wobei dieser Abgas-Teilstrom dann anschließend stromauf des Partikelfilters dem restlichen Abgas zugeführt wird. Besonders einfach zu realisieren ist hierbei eine Ausgestaltung, bei der ein heißer Abgasstrom den relativ kalten NO-Oxidationskatalysator umströmt.

Zusammenfassend gesehen kann somit der NO-Oxidationskatalysator und/oder eine zum NO-Oxidationskatalysator führende Abgasleitung zur Übertragung von thermischer Energie auf den NO-Oxidationskatalysator und/oder zur Übertragung von thermischer Energie auf die Abgasleitung und damit dem zum NO-Oxidationskatalysator geführten Abgasstrom wenigstens bereichsweise von einem heißen Abgasstrom des Abgastraktes umströmt oder durchströmt werden, insbesondere von einem stromab der Heizeinrichtung abgezweigten Abgasstrom umströmt oder durchströmt werden. Konkret kann hierzu vorgesehen sein, dass der NO-Oxidationskatalysator die Heizeinrichtung und/oder eine von der Heizeinrichtung wegführende Abgasleitung wenigstens bereichsweise umschließt oder umgibt. Alternativ dazu kann aber auch vorgesehen sein, dass die Heizeinrichtung und/oder eine von der Heizeinrichtung wegführende Abgasleitung den NO-Oxidationskatalysator wenigstens bereichsweise umschließt oder umgibt.

In Verbindung mit den zuvor genannten konkreten Ausgestaltungen ist es insbesondere vorteilhaft, dass wenigstens eine mittels einer Steuer- und Regeleinrichtung gekoppelte Abzweigeinrichtung vorgesehen ist, mittels der die Menge des stromab der Heizeinrichtung abgezweigten Abgas-Teilstroms in Abhängigkeit von definierten Abzweigparametern gesteuert oder geregelt wird. Dies kann beispielsweise über ein Stellorgan erfolgen.

Gemäß einer alternativen Ausgestaltung hierzu kann der NO-Oxidationskatalysator aber auch rohrförmig ausgebildet sein, mit einer einen Strömungskanal ausbildenden durchgehenden Rohröffnung, wobei ein die Heizeinrichtung ausbildender Heizkatalysator stromaufwärts so an eine Rohrmündung der Rohröffnung anschließt oder wenigstens teilweise formschlüssig in die Rohröffnung eingeschoben ist, dass lediglich ein vorher den Heizkatalysator durchströmender heißer Abgasstrom in die Rohröffnung einströmen kann und damit über die Wandung der Rohröffnung thermische Energie an den NO-Oxidationskatalysator übertragen wird. Zusätzlich dazu kann gegebenenfalls auch durch die thermische Ankopplung des Heizkatalysators an den NO-Oxidationskatalysator thermische Energie übertragen werden. Die thermische Ankopplung erfolgt hier bevorzugt gehäuseseitig.

Gemäß einer besonders bevorzugten erfindungsgemäßen Verfahrensführung, die insbesondere in Kombination mit der Einstellung des ebenfalls erfindungs-gemäßen definierten Temperaturbereichs am NO-Oxidationskatalysator von Vorteil ist, wird mittels der wenigstens einen Heizeinrichtung ein zum Partikelfilter geführter Abgasstrom auf eine definierte Temperatur aufgeheizt, wobei die Temperatur insbesondere in Abhängigkeit von einem Beladungsgrad des Partikelfilters und/oder von einem Wirkungsgrad einer NO₂-basierten Regeneration des Partikelfilters mittels einer am wenigstens einen NO-Oxidationskatalysator gebildeten NO₂-Menge vorgegeben wird. Der besondere Vorteil einer derartigen Ausgestaltung liegt darin, dass stromauf des Partikelfilters durch den wenigstens einen NO-Oxidationskatalysator und die wenigstens eine Heizeinrichtung, die strömungstechnisch zumindest teilweise parallel zueinander angebracht und von einem Abgasstrom durchströmt werden der erhitzte Abgasstrom die Temperatur am Partikelfilter anheben kann, wobei gleichzeitig hohe Mengen an NO₂ aus dem NO-Oxidationskatalysator zur Verfügung stehen, da im Bereich des NO-Oxidationskatalysators eine, sich zugunsten der NO-Bildung auswirkende Temperaturerhöhung erfolgt bzw. keine erhöhten Kohlenwasserstoffkonzentrationen, die zu einem Rückgang der NO-Oxidationsaktivität führen, vorliegen. Die Temperaturerhöhung des Abgasstroms vor dem Partikelfilter kann größtenteils unabhängig von der Erhöhung der NO-Oxidationskatalysatortemperatur erfolgen, so dass beide Nachbehandlungskomponenten in ihrem jeweils optimalen Temperaturbereich betrieben werden können. Da bei hohen Temperaturen die NO-Oxidationsaktivität der NO-Oxidationskatalysatoren und damit die gebildete NO₂-Menge thermodynamisch begrenzt wird, wird der NO-Oxidationskatalysator üblicherweise auf einer tieferen Temperatur als der Partikelfilter betrieben, da an diesem die Russoxidation mit steigender Temperatur ansteigt.

besonders vorteilhaft wird somit eine funktionssichere, die jeweiligen Vorteile ausnutzende und negative Wechselwirkungen vermeidende Kombination einer aktiven und einer passiven Regeneration eines Partikelfilters, unterstützt durch eine aktive Anhebung der NO₂-Menge vom NO-Oxidationskatalysator, zur Verfügung gestellt.

Aufgrund der dadurch möglichen hohen Temperaturen am Partikelfilter bei gleichzeitiger Unterstützung der Rußoxidation durch das starke Oxidationsmittel NO₂ gelingt es, die Regenerationsdauer zu verkürzen und die Regenerationstemperatur auf ca. 400°C abzusenken. Dadurch wird die für die Temperaturerhöhung benötigte Kohlenwasserstoffmenge ebenso verringert wie die Gefahr eines unkontrollierbaren Temperaturanstieges und eine damit verbundene thermische Schädigung des Partikelfilters oder nachgeschalteter Katalysatoren, wie sie im Gegensatz dazu bei einer rein aktiven Regeneration auftreten.

Mit einer derartigen erfindungsgemäßen Lösung ist es somit möglich, die Partikelfilterregeneration ausschließlich über die NO₂-Menge ablaufen zu lassen, wobei im Bedarfsfall die Temperatur am NO-Oxidationskatalysator und gegebenenfalls am Partikelfilter mittels einer als Steuer- und/oder Regeleinrichtung ausgebildeten elektronischen Kontrolleinheit und geeigneten Stellgliedern in das für die jeweils gewünschte Reaktion optimale Temperaturfenster verschoben wird. Das heißt, dass der zum Partikelfilter geführte Abgasstrom mittels der wenigstens einen Heizeinrichtung zu vorgegebenen Zeiten bzw. vorgegebenen Betriebszuständen der Brennkraftmaschine und/oder des Nachbehandlungssystems lediglich auf eine solche Temperatur aufgeheizt wird, die unter der Regenerationstemperatur einer reinen aktiven Partikelfilterregeneration mittels Zugabe von Kohlenwasserstoffen in den Abgasstrom liegt. Bevorzugt wird hierbei dieser zum Partikelfilter geführte Abgasstrom auf eine Temperatur von kleiner 600°C, bevorzugt von kleiner oder gleich in etwa 550°C, höchst bevorzugt von kleiner oder gleich in etwa 450°C aufgeheizt. Ganz besonders bevorzugt liegt die Temperatur des den Partikelfilter zugeführten Abgasstroms in einem Temperaturfenster von in etwa 300°C bis 550°C, höchst bevorzugt in einem Temperaturfenster von in etwa 350°C bis 450°C. Die Temperatur des zum Partikelfilter geführten Abgasstroms wird somit bei der erfindungsgemäßen Lösung besonders bevorzugt in Abhängigkeit von einer NO₂-Konzentration und/oder vom Beladungszustand des Partikelfilters mit kohlenstoffhaltigen Partikeln in einem definierten Bereich wenigstens eines Abgasstroms vorgegeben, und zwar mit Hilfe einer Steuer- und/oder Regeleinrichtung als elektronische Kontrolleinrichtung in Kombination mit geeigneten Stellgliedern.

Demgegenüber liegt die optimale Arbeitstemperatur der NO-Oxidationskatalysatoren zwischen 250°C und 380°C und damit unterhalb der Arbeitstemperatur der Russoxidation am Partikelfilter. Analog zu dem beim Partikelfilter beschriebenen Vorgehen, lässt sich auch hier die optimale Temperatur des NO-Oxidationskatalysators mit Hilfe einer Steuer- und/oder Regeleinrichtung als elektronische Kontrolleinrichtung und geeigneten Stellgliedern einstellen bzw. einregeln.

Der Beladungsgrad des Partikelfilters kann über geeignete mathematische Modelle oder Sensoren, wie Druck- oder Ultraschallsensoren ermittelt werden. Da diese Verfahren und Vorrichtung Stand der Technik sind, wird auf diese an dieser Stelle nicht weiter eingegangen.

Das heißt somit zusammenfassend, dass wenigstens eine, mittels einer Steuer- und/oder Regeleinrichtung gekoppelte oder Bestandteil derselben bildende Wärmeflusskontrolleinrichtung vorgesehen sein kann, mittels der die dem NO-Oxidationskatalysator und/oder die den Partikelfilter zugeführte Menge an thermischer Energie in Abhängigkeit von definierten Aufheizparametern, insbesondere in Abhängigkeit von einem Beladungsgrad des Partikelfilters und/oder von einem Wirkungsgrad einer NO₂-basierten Regeneration des Partikelfilters mittels einer am wenigstens einen NO-Oxidationskatalysator gebildeten NO₂-Menge, gesteuert oder geregelt wird.

Selbstverständlich kann auch wenigstens eine, mittels einer Steuer- und/oder Regeleinrichtung gekoppelte Absperreinrichtung vorgesehen sein, mittels der die Menge des über den NO-Oxidationskatalysator und/oder des über die Heizeinrichtung geführten Gasstroms in Abhängigkeit von definierten Absperr- und/oder Betriebsparametern gesteuert oder geregelt wird. Als Absperreinrichtung fungiert beispielsweise eine Klappe, ein Schieber oder dergleichen.

Wie die zuvor gemachten Ausführungen zeigen, ist es somit vorteilhaft, dass stromauf des Partikelfilters die von den HC-Oxidationskatalysatoren und die von den NO-Oxidationskatalysatoren kommenden Abgasströme vereinigt werden, so dass der gesamte Abgasstrom über den Partikelfilter geleitet wird. Zur Regeneration des Partikelfilters bzw. Partikelabscheiders ist es mit Hilfe der Heizeinrichtung möglich, sowohl die Abgastemperatur als auch den NO₂-Anteil im Abgas zu erhöhen. Der optimale Arbeitsbereich zur Regeneration des Partikelfilters mit Hilfe des am NO-Oxidationskatalysators gebildeten NO₂ reicht typischerweise von 350°C bis 450°C und liegt damit höher als der der NO-Oxidationskatalysatoren. Deshalb bietet es sich an, wenigstens zwei HC-Oxidationskatalysatoren als Heizeinrichtung zu verwenden, wobei der erste HC-Oxidationskatalysator so ausgelegt ist, dass er nicht das komplette, in den Abgasstrom zugeführte Reduktionsmittel oxidiert, so dass der Temperaturhub stromab dieses Katalysators geringer ausfällt. Bevorzugt wird bei dieser Ausführungsvariante stromauf des zweiten HC-Oxidationskatalysators, der die Oxidation des restlichen Reduktionsmittels übernimmt, der NO-Oxidationskatalysator und/oder das diesem zugeführte Abgas thermisch an das vom ersten HC-Oxidationskatalysator kommende Abgas angekoppelt. Mit Hilfe des zweiten HC-Oxidationskatalysators, der stromab der thermischen Kopplung angebracht ist, erfolgt die zusätzliche Temperaturanhebung zur Verbesserung des Rußabbrands im Partikelfilter.

Wie zuvor beschrieben, ist gemäß einer bevorzugten Ausgestaltung der vorliegenden Erfindungsidee vorgesehen, die Heizeinrichtung durch wenigstens einen Heizkatalysator, insbesondere wenigstens einen HC-Oxidationskatalysator, auszubilden. Besonders bevorzugt ist weiter eine Zudosiervorrichtung vorgesehen, mittels der dem Abgasstrom stromauf des Heizkatalysators ein Reduktionsmittel für eine exotherme Reaktion in Abhängigkeit von definierten Dosierparametern zu vorgegebenen Zeiten sowie in vorgegebener Menge zudosiert wird. Die Zudosierung erfolgt dabei insbesondere periodisch. Für den besonders bevorzugten Fall, dass der Heizkatalysator ein HC-Oxidationskatalysator ist, ist das Reduktionsmittel bevorzugt durch Kohlenwasserstoffe gebildet. Die Kohlenwasserstoffe werden dabei bevorzugt durch Kraftstoff gebildet. Besonders bevorzugt ist es, die Zugabe der Kohlenwasserstoffe durch eine im Abgastrakt vorgesehene, separate Zudosiervorrichtung, beispielsweise eine Einspritzdüse oder dergleichen, zuzudosieren. Diese Zudosierung erfolgt dann stromauf des Heizkatalysators, indem dem Abgasstrom zu vorgegebenen Zeiten eine vorgegebene Menge Kohlenwasserstoffe zudosiert bzw. zugedüst wird. Besonders bevorzugt ist hierbei, wie bereits zuvor erwähnt, eine entsprechend vorgegebener Steuer- und/oder Regelparameter erfolgende, zum Beispiel periodisch wiederkehrende, Zudosierung mit Hilfe einer elektronischen Kontrolleinheit.

Zum Oxidieren der zudosierten Kohlenwasserstoffe kann somit der zu erhitzende Abgasstrom über die bevorzugt als HC-Oxidationskatalysator ausgebildete Heizeinrichtung geführt werden, wodurch der Abgasstrom erhitzt wird. Die dadurch zu erzielende Heizleistung ist allerdings durch die vorhandene Sauerstoffmenge limitiert. Denn für den Fall, dass der Lambdawert, also das Verhältnis von Sauerstoff- bzw. Luft- zu Kraftstoffmenge, den Wert 1 erreichen sollte, ist keine Oxidation der Kohlenwasserstoffe mehr möglich. Um dies zu vermeiden, wird gemäß einer weiteren bevorzugten Ausgestaltung vorgeschlagen, dem zu erhitzenden Abgasstrom, nach Erreichen einer bestimmten vorgegebenen Temperatur und/oder einer vorgegebenen Zeit und/oder bei Unterschreiten eines vorgegebenen Lambda- oder Sauerstoffwerts, Frischluft zuzuführen. Diese optionale Frischluftzuführung bewirkt ein Anheben des Lambdawerts und damit auch eine Anhebung der Heizleistung. Die Frischluft kann dabei generell auf der Ladeluftseite der Brennkraftmaschine abgezweigt werden, konkret zum Beispiel auch stromauf und/oder stromab einer Einmündung einer Abgasrückführleitung in eine Ladeluftleitung der Brennkraftmaschine. Weiterhin ist der Einsatz eines Gebläses oder Verdichters zur Zuführung von Frischluft denkbar.

Eine alternative Möglichkeit zur Anhebung der Abgastemperatur besteht darin, einen bevorzugt mit Kraftstoff betriebenen Brenner als Heizeinrichtung einzusetzen. Für diesen gilt in besonderem Maße die oben beschriebene Problematik der zu geringen Luftverhältnisse, die analog der Lösung für den Heizkatalysator umgangen werden kann.

Die Heizeinrichtung, insbesondere der Heizkatalysator, kann grundsätzlich außerhalb des Abgastraktes angeordnet werden, das heißt so, dass dieser nicht vom Abgas umströmt wird. Dies führt allerdings relativ schnell zu einer Auskühlung dieser Heizeinrichtung, insbesondere des Heizkatalysators. Sinnvoller ist es daher, die Heizeinrichtung, insbesondere den Heizkatalysator, so im Abgastrakt anzuordnen, dass er, zumindest teilweise, vom Abgas, das dem NO-Oxidationskatalysator zugeführt wird, umströmt wird, wodurch zum einen die Wärmeverluste an die Umgebung verringert und gleichzeitig der Wärmeübergang auf den NO-Oxidationskatalysator verbessert werden.

Zudem ist die Unterbringung der Heizeinrichtung, insbesondere des Heizkatalysators, und des NO-Oxidationskatalysators in einem gemeinsamen Gehäuse denkbar.

Um das System weiter zu verbessern, ist es weiterhin möglich, den bevorzugt als HC-Oxidationskatalysator ausgebildeten Heizkatalysator zusätzlich mit einer NO-Oxidationsaktivität zu versehen, wodurch die NO₂-Anteile im Nicht-Regenerationsbetrieb angehoben und damit die Oxidation der Partikel mit Hilfe der passiven Regeneration verbessert werden. Dadurch gelingt es, die Intervalle zwischen den aktiven Temperaturanhebungen zu verlängern. Der Heizkatalysator sollte hierbei thermisch stabiler ausgeführt sein als der reine NO-Oxidationskatalysator. Dies hat üblicherweise eine geringere NO-Oxidationsaktivität im Vergleich zu den reinen NO-Oxidationskatalysatoren zur Folge, wie dies bereits zuvor erwähnt worden ist.

Um, insbesondere beim Einsatz von HC-Oxidationskatalysatoren als Heiz"katalysatoren, hohe Kohlenwasserstoffkonzentrationen stromab des Partikelfilters zu vermeiden, kann dieser mit einem Katalysator zur Oxidation von Kohlenwasserstoffen versehen werden. Auch ein stromauf- und/oder stromab des Partikelfilters angebrachter bzw. angeordneter Katalysator mit Kohlenwasserstoffoxidationsaktivität ist denkbar. Als Aktivkomponenten kommen unter anderem Vanadiumoxid, Cer, Zeolithe und Elemente der Platinmetallgruppe, also Platin, Palladium, Ruthenium, Rhodium, Osmium, Iridium, in Frage.

Demgegenüber kommen sowohl für die NO- als auch für die HC-Oxidationskatalysatoren als Aktivkomponenten hauptsächlich Metalle der Platinmetallgruppe in Frage, allerdings unterscheidet sich deren Zusammensetzung: Um die thermische Stabilität der HC-Oxidationskatalysatoren zu verbessern, liegt zum Beispiel deren Palladiumanteil höher als der der NO-Oxidationskatalysatoren. Für die HC-Oxidationskatalysatoren kommt grundsätzlich als Aktivelement auch Cer in Frage.

Die Aktivität beider Katalysatortypen kann zum Beispiel durch den Einsatz von Zeolithen zusätzlich erhöht werden.

Die Regeneration kann weiter optional verbessert werden, indem das NO₂-Angebot zusätzlich angehoben wird. Dies kann durch Anheben der NOₓ-Rohemission erreicht werden. Dies gelingt durch Ändern von motorischen Betriebsparametern wie zum Beispiel Einspritzdruck, Abgasrückführungsraten, Spritzbeginn, Anzahl der Einspritzungen, Saugdrosselstellung etc.. Durch das höhere NOₓ-Angebot steigt gleichzeitig die an den NO-Oxidationskatalysatoren gebildete NO₂-Menge. Eine weitere Möglichkeit besteht darin, die gebildete NO₂-Menge durch Verbesserung der NO-Oxidation an den NO-Oxidationskatalysatoren zu erhöhen. Dies gelingt neben der Anhebung der Katalysatortemperatur durch Erhöhen der Verweilzeit, insbesondere durch Absenken des Abgasvolumenstroms. Um dies zu erreichen, können unter anderem die bereits oben beschriebenen Maßnahmen zur Anhebung der NOₓ-Rohemission eingesetzt werden.

Um neben den Partikeln auch die Emission von Stickoxiden zu verringern, können im Abgastrakt bzw. Abgasstrang zusätzlich Katalysatoren zur NOₓ-Reduktion, wie beispielsweise wenigstens ein NOₓ-Speicherkatalysator und/oder wenigstens ein SCR-Katalysator, vorgesehen sein. Die NOₓ-Speicherkatalysatoren können stromab der Oxidationskatalysatoren und/oder stromab des Partikelfilters angeordnet sein, während für die SCR-Katalysatoren auch eine Positionierung stromauf der Oxidationskatalysatoren denkbar ist. Für die NOₓ-Speicherkatalysatoren werden bevorzugt Platin- und/oder Barium und/oder Calcium als Aktivkomponenten eingesetzt. Demgegenüber ist für die SCR-Katalysatoren der Einsatz von wolframoxidstabilisiertem Vanadiumpentoxid, vorzugsweise auf Titandioxidbasis, oder Eisenzeolithe oder Kupferzeolithe oder Kobaltzeolithe oder Zirkonoxid sinnvoll. Der Bauraum eines derartigen Systems zur Verminderung von Stickoxiden und Partikeln lässt sich verringern, indem der wenigstens eine Partikelfilter und der wenigstens eine SCR-Katalysator und/oder der wenigstens eine NOₓ-Sperrkatalysator eine bauliche Einheit bilden, wobei der Partikelfilter mit einer SCR-Katalysator- und/oder NOₓ-Speicherkatalysatorbeschichtung versehen sein kann.

Zusammenfassend kann daher festgehalten werden, dass mit der erfindungsgemäßen Lösung, bei der eine aktive und passive Partikelfilterregeneration wenigstens zeitweise kombiniert werden, eine Reihe von Vorteilen erzielt werden können: So kann die Regenerationsfähigkeit des Systems aktiv beeinflusst werden. Weiter kann die Einstellung so vorgenommen werden, dass die größte Regenerationsarbeit über die Rußoxidation mit Hilfe von NO₂, das an einem vorgeschalteten NO-Oxidationskatalysator gebildet wird, abläuft; das heißt, dass Reduktionsmittel bzw. Kraftstoff nur dann zugegeben wird, wenn die Regenerationsarbeit mittels NO₂ auf Grund zu geringer Temperaturen nicht ausreichen sollte, so dass ein Kraftstoffverbrauch gegenüber der reinen aktiven Partikelfilterregeneration deutlich minimiert wird. Weiter geht mit der erfindungsgemäßen Lösung eine deutlich geringere thermische Belastung des Partikelfilters, insbesondere des Dieselpartikelfilters, und eventuell nachgeschalteter Abgasnachbehandlungskomponenten einher. Ein weiterer wesentlicher Vorteil ist, dass die Regeneration sehr gleichmäßig ablaufen kann, wodurch die Gefahr von sogenannten Rußnestern und Durchbränden des Partikelfilters vermindert wird. Ein weiterer wesentlicher Vorteil kann darin gesehen werden, dass der Platinbedarf und damit die Kosten zur Herstellung des Abgasnachbehandlungssystems deutlich unter denen von ein aktiven Regenerationssystemen, wie zum Beispiel HCl-Regenerationssystemen, liegen, da geringere Mengen von Kohlenwasserstoffen oxidiert werden müssen und eine Oxidation von, während der aktiven Regeneration aus dem Ruß gebildetem Kohlenmonoxid nicht notwendig ist. Und schließlich treten aufgrund der geringen treibenden Temperaturdifferenz zwischen Abgassystem und Umgebung weniger Wärmeverluste an die Umgebung auf als bei der reinen aktiven Partikelfilterregeneration, wodurch weniger Aufwendungen für Isolierung und Material etc. notwendig sind.

Mehrere Ausführungsbeispiele der vorliegenden Erfindung werden nachfolgend anhand einer Zeichnung näher erläutert:

Es zeigen:
- Fig. 1: schematisch ein Diagramm, welches die Verbesserung der Rußoxidation durch Anhebung der Temperatur beispielhaft zeigt;
- Fig. 2: schematisch ein Diagramm, welches die Verbesserung der Rußoxidation durch Anhebung des NO₂-Angebots und der Temperatur beispielhaft zeigt;
- Fig. 3: eine erste Ausführungsform einer parallelen Anordnung eines NO-Oxidationskatalysators und eines als HC-Oxidationskatalysators ausgeführten Heizkatalysators mit thermischer Kopplung stromauf eines Partikelfilters;
- Fig. 3a: eine Ausführungsform gemäß Fig. 3 mit von unterschiedlichen Zylindern einer Brennkraftmaschine abgezweigten Abgasströmen;
- Fig. 4: schematisch eine Ausführungsform gemäß Fig. 3 mit zwei HC-Oxidationskatalysatoren;
- Fig. 5: schematisch eine alternative Ausführungsform einer parallelen Anordnung eines NO-Oxidationskatalysators und eines als HC-Oxidationskatalysator ausgeführten Heizkatalysators, bei dem die Einkopplung von thermischer Energie über einen heißen Abgasstrom erfolgt;
- Fig. 6a: schematisch eine weitere alternative Ausführungsform einer parallelen Anordnung eines NO-Oxidationskatalysators und eines als HC-Oxidationskatalysators ausgebildeten Heizkatalysators, bei dem der NO-Oxidationskatalysator von einem heißen Abgasstrom umströmt wird;
- Fig. 6b: schematisch eine Schnittdarstellung entlang der Linie A-A der Fig. 6a;
- Fig. 7: schematisch eine weitere alternative Ausführungsform, bei der der NO-Oxidationskatalysator einen als HC-Oxidationskatalysator ausgebildeten Heizkatalysator umschließt;
- Fig. 8: schematisch eine weitere alternative Ausgestaltung einer erfindungsgemäßen Vorrichtung zur Regeneration eines im Abgastrakt einer Brennkraftmaschine angeordneten Partikelfilters, bei der das vom Heizkatalysator kommende Abgas den NO-Oxidationskatalysator innenseitig durchströmt;
- Fig. 9: schematisch eine weitere alternative Ausführungsform, bei der ein als HC-Oxidationskatalysator ausgebildeter Heizkatalysator einen NO-Oxidationskatalysator umschließt;
- Fig. 10: schematisch eine weitere alternative Ausführungsform in Verbindung mit einem Abgasturbolader; und
- Fig. 11: eine weitere alternative Ausführung in Verbindung mit einer Abgasturboladeranordnung, bei der die Abgasströme von unterschiedlichen Zylindergruppen einer Brennkraftmaschine abströmen.

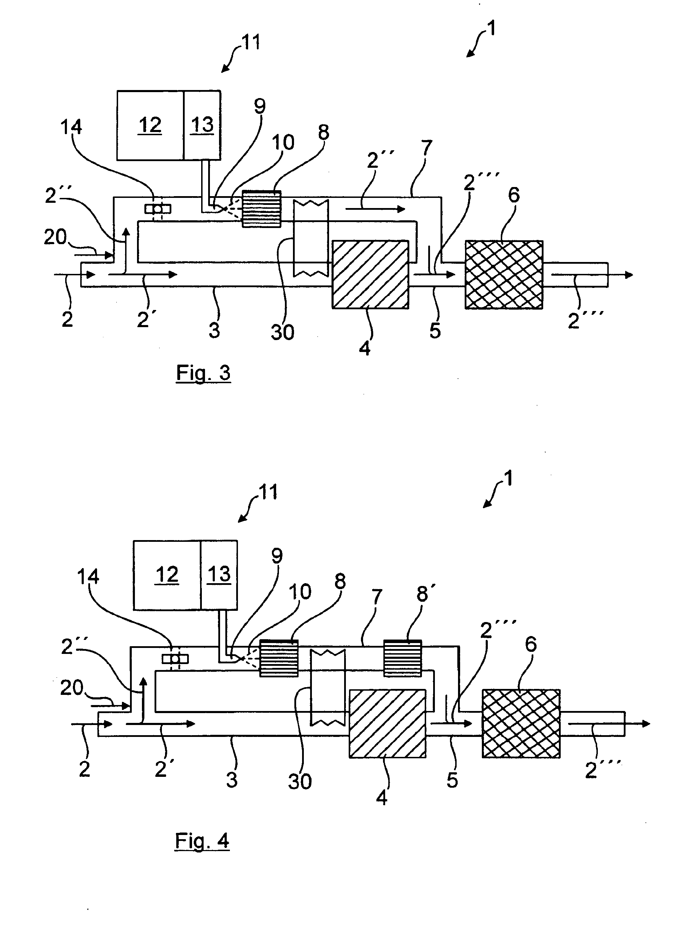

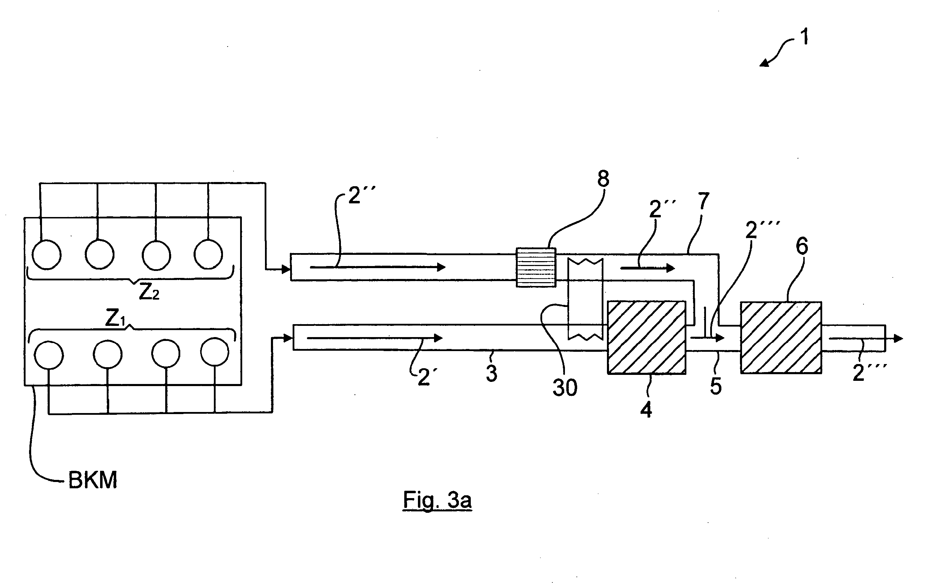

In der Fig. 3 ist eine erste erfindungsgemäße Ausführungsform beispielhaft gezeigt, bei der im Abgastrakt 1 einer hier nicht dargestellten Brennkraftmaschine, insbesondere einer Diesel-Brennkraftmaschine, ein Abgasstrom 2 mittels einer Zuführleitung 3 zu einem NO-Oxidationskatalysator 4 geführt wird. Von diesem NO-Oxidationskatalysator 4 führt eine Abführleitung 5 zu einem Partikelfilter 6.

Stromauf des NO-Oxidationskatalysators 4 zweigt eine Abzweigleitung 7 von der Zuführleitung 3 ab und mündet stromab des NO-Oxidationskatalysators 4 sowie stromauf des Partikelfilters 6 in die Abführleitung 5 ein.

In der Abzweigleitung 7 ist ein HC-Oxidationskatalysator 8 als Heizeinrichtung angeordnet. Weiter ist in der Abzweigleitung 7 stromauf des HC-Oxidationskatalysators 8 eine Düse 9 angeordnet, mittels der Kraftstoff 10 als Reduktionsmittel in die Abzweigleitung 7 stromauf des HC-Oxidationskatalysators 8 zugedüst werden kann. Die Düse 9 ist Bestandteil einer Zudosiervorrichtung 11, die neben der Düse 9 auch noch einen Kraftstoffbehälter 12 und eine die Zudosierung steuernde bzw. regelnde Steuer- und/oder Regeleinrichtung 13 aufweist.

Optional ist in der Abzweigleitung 7 hier lediglich beispielhaft stromauf der Düse 9 ein Absperrorgan 14 angeordnet, das ebenfalls mit einer elektronischen Kontrolleinheit, die hier allerdings nicht dargestellt ist, gekoppelt sein kann, um zu vorgegebenen Zeiten eine definierte Abgasmenge von dem Abgasstrom 2 abzuzweigen, so dass ein erster Abgasstrom 2' durch den NO-Oxidationskatalysator 4 und ein zweiter Abgasstrom 2" durch die Abzweigleitung 7 strömt. Selbstverständlich kann auch, gegebenenfalls zusätzlich, an einer anderen Stelle der Abzweigleitung 3 ein Absperrorgan vorgesehen sein, um die Aufteilung der Äbgasströme 2' und 2" zu verändern. Aus Gründen der Übersichtlichkeit wird diese hier allerdings nicht dargestellt. Diese beiden Abgasströme werden dann stromab des NO-Oxidationskatalysators 4 und stromab des HC-Oxidationskatalysators 8 wieder zusammengeführt und als Abgasstrom 2'" dem Partikelfilter 6 zugeführt.

Wie dies aus der schematischen Darstellung der Fig. 3 weiter ersichtlich ist, ist in den Abgastrakt 1 stromab des HC-Oxidationskatalysators 8 und stromauf des NO-Oxidationskatalysators 4 ein Wärmetauscher 30 thermisch eingekoppelt, mittels dem eine definierte Menge an thermischer Energie, bevorzugt gesteuert oder geregelt durch eine hier nicht dargestellte Steuer- und/oder Regeleinrichtung, aus dem heißen Abgasstrom 2" stromab des HC-Oxidationskatalysators 8 ausgekoppelt und in den demgegenüber kühleren Abgasstrom 2' eingekoppelt wird. Die Menge der einzukoppelnden bzw. auszukoppelnden thermischen Energie bzw. Wärme wird hier, ebenso wie bei sämtlichen nachfolgenden Ausführungsformen über die zugeführte Kohlenwasserstoffmenge und/oder eine Wärmeflusskontrolleinrichtung gesteuert bzw. geregelt, die den Wärmebedarf entsprechend der jeweils gewünschten Solltemperatur am NO-Oxidationskatalysator 4 und/oder am Partikelfilter 6 vorgibt.

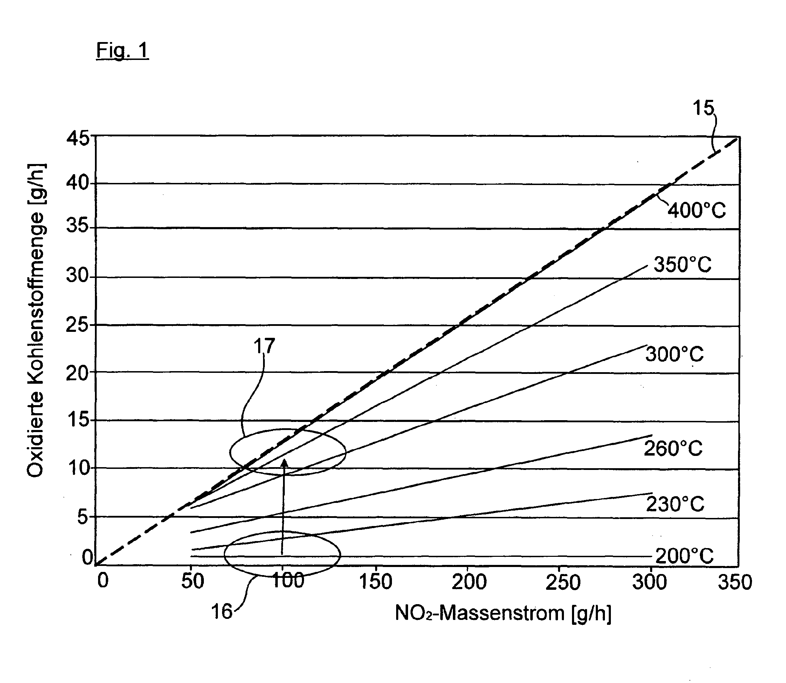

Der NO-Oxidationskatalysator 4 ist in der Realität bevorzugt wesentlich größer ausgelegt und dimensioniert als der HC-Oxidationskatalysator 8, was dadurch bedingt ist, dass die Partikelfilterregeneration im Wesentlichen als NO₂-basierte Partikelfilterregeneration durchgeführt werden soll, das heißt mittels des im NO-Oxidationskatalysator 4 gebildeten NO₂. Lediglich für den Fall, dass die Regenerationsarbeit des im bzw. am NO-Oxidationskatalysator 4 gebildeten NO₂ nicht ausreichen sollte, wird entsprechend gesteuert oder geregelt mittels der Steuer- und/oder Regeleinrichtung 13 über die Düse 9 Kraftstoff 10 in die Zweigleitung 7 zudosiert. Gleichzeitig wird durch entsprechende Ansteuerung des Absperrorgans 14 ein entsprechender Abgasmassenstrom als zweiter Abgasstrom 2" über die Abzweigleitung 7 geleitet, um dem HC-Oxidationskatalysator 8 einen mit Kohlenwasserstoffen angereicherten Abgasstrom zuzuführen, wodurch im HC-Oxidationskatalysator 8 eine exotherme Reaktion stattfindet, die einen heißen zweiten Abgasstrom 2" erzeugt, der über den Wärmetauscher 30 strömt und weiter anschließend stromab des NO-Oxidationskatalysators 4 mit dem ersten Abgasstrom 2" vermischt wird, so dass insgesamt gesehen ein mit NO₂ angereicherter und auf ein höheres Temperaturniveau angehobener Abgasstrom 2"' dem Partikelfilter 6 zugeführt wird, wodurch die NO₂-basierte Rußoxidation im Partikelfilter 6 in einer optimierten Weise abläuft, wie dies schematisch in der Fig. 1 dargestellt ist. Dort ist mit 15 die den 100%igen-Umsatz kennzeichnende Ideallinie eingezeichnet, sprich hier werden pro zugeführtes Gramm NO₂ 0,13g Kohlenstoff oxidiert. Wird nunmehr von der elektronischen Kontrolleinheit erfasst, dass die NO₂-Regenerationsarbeit im unteren Temperaturbereich 16 keine zufriedenstellenden Regenerationsergebnisse mehr liefert und/oder der Beladungsgrad des Partikelfilters über ein vorgegebenes Limit angestiegen ist, so wird durch die zuvor geschilderten Maßnahmen das Temperaturniveau auf den oberen Temperaturbereich 17 angehoben, um den Rußabbrand wieder effektiver und optimiert zu gestalten. Dabei ist es aufgrund der erfindungsgemäßen Kombination einer aktiven und passiven Regenerationsmöglichkeit zum Beispiel ausreichend, den Abgasstrom 2"', der zum Partikelfilter 6 geführt wird, auf ein Temperaturniveau anzuheben, das bevorzugt im Bereich von 370°C bis 400°C liegt.

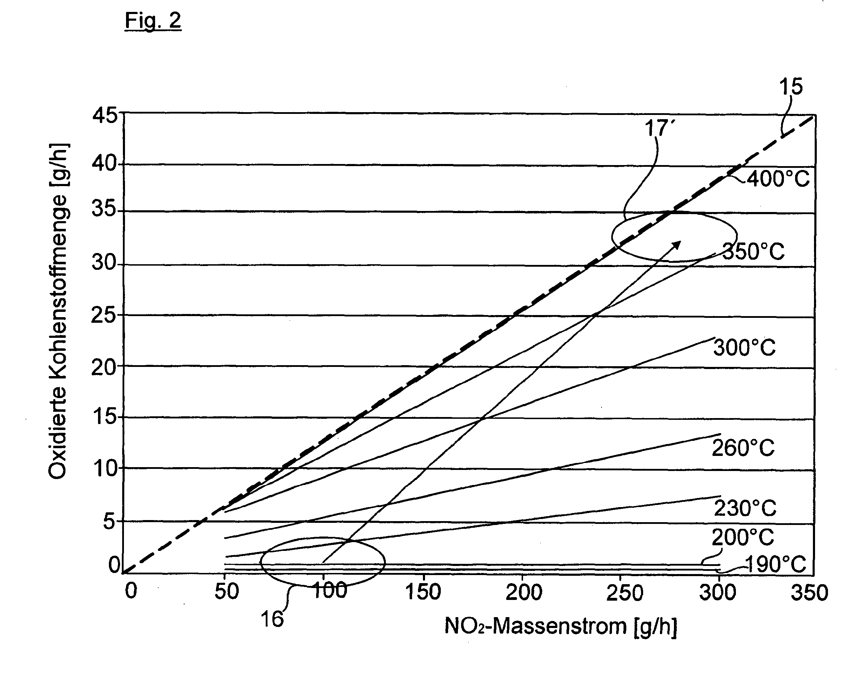

Durch die mittels des Wärmetauschers 30 erreichte, gezielte Einkopplung von thermischer Energie in den zum NO-Oxidationskatalysator 4 geführten Abgasstrom 2' kann zudem am NO-Oxidationskatalysator 4 ein definiertes Temperaturfenster, bevorzugt im Bereich von 250°C bis 380°C, eingestellt werden, wodurch es zu einer Optimierung der NO₂-Erzeugung im NO-Oxidationskatalysator 4 kommt. Diese Maßnahme kann, wie in der Fig. 2 dargestellt, die Regenerationsfähigkeit im Gegensatz zur reinen Anhebung der Abgastemperatur weiter zusätzlich verbessern, da nun nicht nur höhere Temperaturen, sondern auch höhere N02-Mengen zur Verfügung stehen 17'.

Die NO₂-Menge und/oder die Regenerationsfähigkeit und/oder der Beladungsgrad des Partikelfilters können beispielsweise durch mathematische Modelle und/oder Kennfelder und/oder durch Abgassensoren, insbesondere durch Drucksensoren, NO₂-Sensoren, NOₓ-Sensoren, Temperatursensoren und/oder Sensoren zur Bestimmung der Partikel- bzw. Rußmenge ermittelt werden.

Eine weitere, in der Fig. 3a dargestellte Möglichkeit der Aufteilung der Abgasteilströme 2' und 2" besteht darin, dass der erste Abgasstrom 2' von einer ersten Zylindergruppe Z₁ und der zweite Abgasstrom 2" von einer zweiten Zylindergruppe Z₂ einer Brennkraftmaschine BKM abgezweigt werden, das heißt dass die beiden Abgasströme 2', 2" strömungstechnisch mit unterschiedlichen Zylindern der Brennkraftmaschine verbunden sind. Ansonsten entspricht der Aufbau und die Funktionsweise dem- bzw. derjenigen der Fig. 3, so dass diesbezüglich auf die vorherigen Ausführungen verwiesen wird. Durch diese in der Fig. 3a gezeigte Vorgehensweise kann auf die separate Zuführungsvorrichtung für Kohlenwasserstoffe verzichtet werden, da durch Verstellen von Betriebsparametern, insbesondere Einspritzzeitpunkt und/oder Einspritzdruck und/oder Anzahl der Einspritzungen und/oder Saugdrosselstellung, der Zylinder der zweiten Zylindergruppe Z₂ hohe Kohlenwasserstoffmengen stromauf des HC-Oxidationskatalysators 8 erzeugt werden können.

Das zuvor Gesagte gilt in analoger Weise für die alternative Ausgestaltung gemäß der Fig. 4, bei der im Unterschied zur Ausgestaltung nach Fig. 3 stromab des HC-Oxidationskatalysators 8 und stromab der Einkopplung des Wärmetauschers 30 ein weiterer HC-Oxidationskatalysator 8' in die Abzweigleitung 7 integriert ist. Der erste HC-Oxidationskatalysator 8 ist hier so ausgelegt, dass er nicht das komplette, in den Abgasstrom zugeführte Reduktionsmittel (Kraftstoff 10) oxidiert, so dass der Temperaturhub stromab dieses HC-Oxidationskatalysators geringer ausfällt. Dadurch wird sichergestellt, dass über den Wärmetauscher 30 lediglich eine solche geringe thermische Energie ausgekoppelt werden kann, die ausreicht, um den NO-Oxidationskatalysator 4 im gewünschten Temperaturfenster zu betreiben, ohne dass es zu einer Überhitzung im Bereich des NO-Oxidationskatalysators 4 kommt. Insbesondere kann dies gegebenenfalls auch ohne aufwendige Steuer- und/oder Regeleinrichtungen zur Kontrolle des Wärmeflusses erfolgen. Der eigentliche und den zweiten Abgasstrom 2" auf die gewünschte hohe Temperatur für die Partikelfilterregeneration bringende Temperaturhub findet hier dann bei einer Verbrennung der restlichen Kohlenwasserstoffe im entsprechend dimensionierten zweiten HC-Oxidationskatalysator 8' statt. Ansonsten entspricht der Aufbau demjenigen der Fig. 3, so dass bezüglich weiterer näherer Erläuterungen auf die zuvor gemachten Ausführungen zur Fig. 3 verwiesen wird.

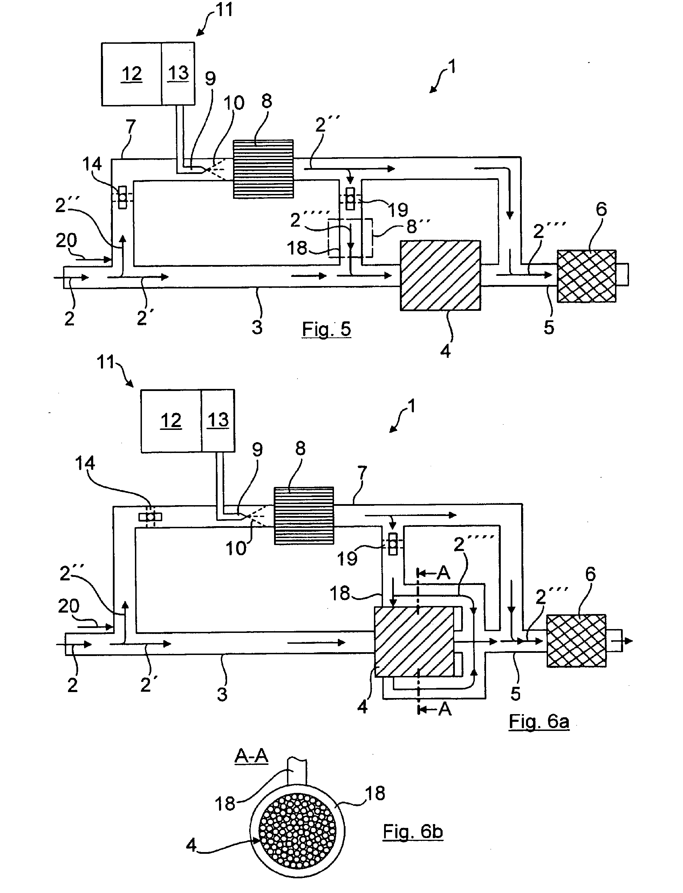

In der Fig. 5 ist nunmehr eine weitere alternative Ausgestaltung gezeigt, die soweit nicht anders beschrieben, vom Aufbau her demjenigen der Fig. 3 entspricht. Im Unterschied zur Fig. 3 ist hier keine Wärmeauskopplung bzw. Wärmeeinkopplung mittels eines Wärmetauschers 30 vorgesehen. Vielmehr zweigt hier von der Abzweigleitung 7 eine weitere Zweigleitung 18 ab, und zwar stromab des HC-Oxidationskatalysators 8. Diese Zweigleitung 18 mündet stromauf des NO-Oxidationskatalysators 4 wieder in die Zuführleitung 3 ein. Im Bereich der Zweigleitung 18 ist ein weiteres Absperrorgan 19 vorgesehen, mittels dem entsprechend gesteuert oder geregelt in Abhängigkeit von vorgegebenen Abzweigparametern ein Abgas-Teilstrom 2"" von dem zweiten Abgasstrom 2" abgezogen werden kann. Dieses Abzweigen des Abgas-Teilstroms 2"" erfolgt zu vorgegebenen Zeiten in vorgegebener Menge, bevorzugt gesteuert oder geregelt über eine den Wärmefluss kontrollierende Wärmeflusskontrolleinrichtung, die Bestandteil einer Steuer- und/oder Regeleinrichtung ist. Wird das Absperrorgan 19 geöffnet und ein Abgas-Teilstrom 2"" stromab des HC-Oxidationskatalysators 8 vom zweiten Abgasstrom 2" abgezweigt, dann strömt ein heißer Teilabgasstrom zum NO-Oxidations-katalysator 4, der dann den ebenfalls zum NO-Oxidationskatalysator 4 geführten ersten Abgasstrom 2' auf ein solches Temperaturniveau anhebt, dass die NO₂-Bildung im NO-Oxidationskatalysator 4 optimiert wird. Insbesondere erfolgt eine Abzweigung des heißen Abgas-Teilstroms 2"" zu denjenigen Zeiten, in denen die Temperatur des NO-Oxidationskatalysators 4 droht, unter einen optimalen Temperaturbereich für die NO₂-Bildung abzufallen, wie dies zuvor bereits ausführlich dargestellt und erläutert worden ist.

Um zu vermeiden, dass eine unerwünschte HC-Menge über diesen Abgas-Teilstrom 2"" stromauf des NO-Oxidationskatalysators 4 zugeführt wird, was zu einem Rückgang der NO-Oxidationsaktivität des NO-Oxidationskatalysators 4 führen würde, kann ferner auch eine hier nicht dargestellte weitere Erfassungseinrichtung vorgesehen sein, zum Beispiel ein HC-Sensor oder dergleichen, mittels dem die dem NO-Oxidationskatalysator 4 zugeführte HC-Menge überwacht wird. Falls ein kritischer HC-Mengen-Sollwert für den NO-Oxidationskatalysator 4 erreicht bzw. überschritten wird, kann dann entsprechend gesteuert oder geregelt die Zuführung des Abgas-Teilstroms 2"" gegebenenfalls gedrosselt bzw. auch gestoppt werden.

Zudem ist es möglich, innerhalb der Zweigleitung 18 einen weiteren HC-Oxidationskatalysator 8" anzubringen, der insbesondere zur Oxidation von, eventuell noch im Abgasstrom 2"" enthaltenen Kohlenwasserstoffen, dient. Dies ist in der Fig. 5 schematisch und strichliert eingezeichnet.

Grundsätzlich kann diese eben beschrieben Verfahrensführung auch mit zwei im Abgasstrom 2" angebrachten HC-Oxidationskatalysatoren im Sinne der Ausführungsform nach Fig. 4 umgesetzt werden. In diesem Fall, der hier aber nicht dargestellt ist, zweigt dann die Zweigleitung 18 im Bereich zwischen den beiden HC-Oxidationskatalysatoren ab und mündet stromauf des NO-Oxidationskatalysators 4 in die Zuführleitung 3 ein. Da vom ersten HC-Oxidationskatalysator in diesem Fall üblicherweise die zugeführten Kohlenwasserstoffe nicht vollständig oxidiert werden, bietet es sich besonders in diesem Fall an, im Teilstrom 2"" einen weiteren HC-Oxidationskatalysator 8" anzuordnen, um das Auftreffen von Kohlenwasserstoffen auf den NO-Oxidationskatalysator 4 zu verhindern. Ansonsten entsprechen der Aufbau und die Funktionsweise denjenigen der Fig. 3 bzw. 4.

In der Fig. 6a ist eine weitere alternative Ausführungsform gezeigt, die im Wesentlichen identisch zum Aufbau gemäß der Fig. 5 ist. Im Unterschied zum Aufbau gemäß der Fig. 5 ist hier jedoch die Zweigleitung 18 so ausgeführt, dass diese den NO-Oxidationskatalysator 4 rohrförmig umschließt, wie dies insbesondere auch aus der einen Schnitt entlang der Linie A-A zeigenden Fig. 6b hervorgeht. Dadurch umströmt der von den zweiten Abgasstrom 2" abgezweigte Abgas-Teilstrom 2"" den NO-Oxidationskatalysator 4 außenwandseitig, wodurch ebenfalls eine hervorragende Einkopplung von thermischer Energie in den NO-Oxidationskatalysator 4 möglich ist, um diesen in einem gewünschten Temperaturfenster zu halten.

Ansonsten entspricht auch hier wiederum die Funktionsweise und der Aufbau derjenigen der Fig. 5, so dass bezüglich weiterer Detailmerkmale auf die zuvor gemachten Ausführungen verwiesen wird.

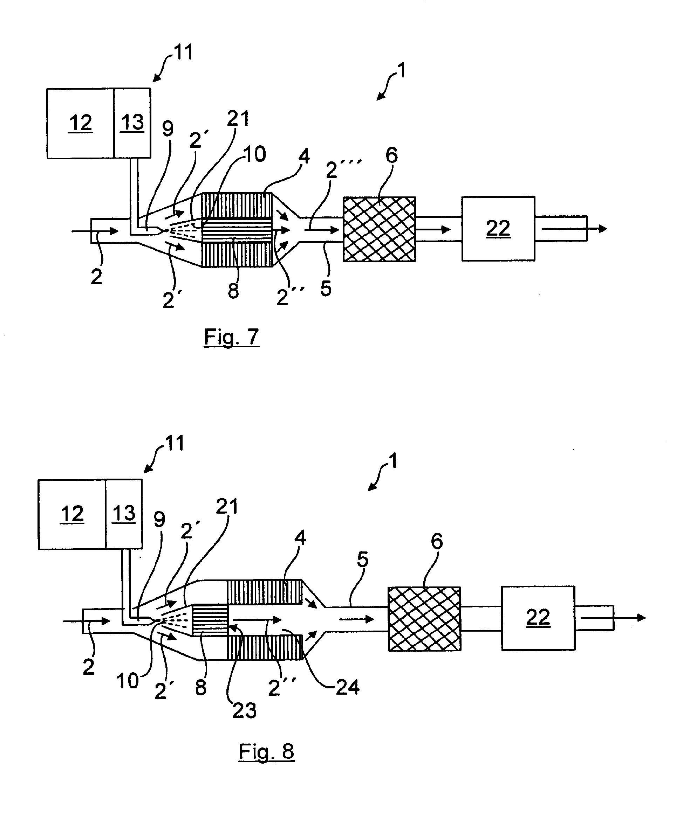

In der Fig. 7 ist schließlich eine Ausführungsform dargestellt, bei der ein den Heizkatalysator bzw. die Heizeinrichtung bildender HC-Oxidationskatalysator 8 von dem NO-Oxidationskatalysator 4 umschlossen ist. Dadurch wird die Auskühlung des HC-Oxidationskatalysators 8 besser vermieden und zugleich die Temperatur des NO-Oxidationskatalysators 4 dergestalt erhöht, dass dessen Temperaturniveau stets im gewünschten Bereich gehalten werden kann. Die Zudosierung des Kraftstoffes 10 erfolgt hier in analoger Weise zu den zuvor beschriebenen Ausführungsformen lediglich zum HC-Oxidationskatalysator 8 hin. Zur Aufteilung der Abgasströme durch den NO-Oxidationskatalysator 4 einerseits und den HC-Oxidationskatalysator 8 andererseits ist bevorzugt ein hier lediglich schematisch dargestelltes Strömungsleitelement 21 vorgesehen. Weiter kann im Bereich dieses Leitelementes 21 auch ein Absperrorgan vorgesehen sein, welches die Menge bzw. generell den Zufluss eines Abgasstroms zum HC-Oxidationskatalysator 8 steuert bzw. regelt. Dies ist hier allerdings aus Übersichtlichkeitsgründen nicht mit dargestellt.

In der Fig. 7 ist ferner lediglich rein schematisch noch ein ebenfalls im Abgastrakt 1 angeordneter NOₓ-Reduktionskatalysator 22 gezeigt, der zum Beispiel als NOₓ-Speicherkatalysator oder SCR-Katalysator ausgebildet ist.

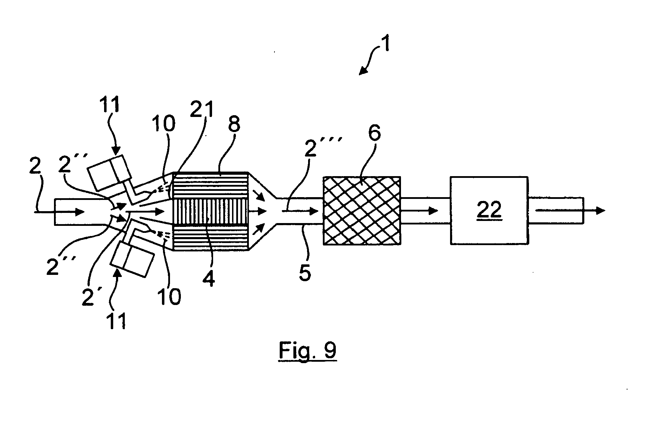

In der Fig. 9 ist eine Umkehrung der Anordnung gemäß Fig. 7 dargestellt, und zwar dergestalt, dass hier der HC-Oxidationskatalysator 8 den NO-Oxidationskatalysator 4 umschließt und umgibt. Entsprechend erfolgt dann die Zudosierung des Kraftstoffes 10 über hier zwei separate Zudosiervorrichtungen 11 in den zum HC-Oxidationskatalysator 8 geführten Abgasstrom 2". Ansonsten entspricht der Aufbau der Fig. 9 demjenigen der Fig. 7.

In der Fig. 8 ist schließlich eine weitere alternative Ausgestaltung gezeigt, bei der der HC-Oxidationskatalysator 8 stromaufwärts so an eine Rohrmündung 23 einer Rohröffnung 24 des rohrförmig ausgebildeten NO-Oxidationskatalysators 4 anschließt, dass lediglich der den HC-Oxidationskatalysator 8 durchströmende Abgasstrom 2" in die durchgehende Rohröffnung 24 einströmen kann und über die Wandung der Rohröffnung 24 thermische Energie an den NO-Oxidationskatalysator 4 übertragen werden kann. Gegebenenfalls kann hier auch eine Wärmeübertragung durch die Ankopplung des HC-Oxidationskatalysators 8 an den NO-Oxidations-katalysator 4 erfolgen.

Ansonsten entspricht der Aufbau auch hier wiederum demjenigen der Fig. 7 und 9, so dass bezüglich der weiteren Ausgestaltung und der Funktionsweise auf die zuvor gemachten Ausführungen verwiesen wird.

An dieser Stelle sei nochmals ausdrücklich erwähnt, dass die Funktionsweise und Verfahrensführung gemäß den Ausgestaltungen der Fig. 5 bis 9 insbesondere im Hinblick auf die Temperaturanhebung gemäß der Fig. 1 und 2 derjenigen der Fig. 4 entspricht.

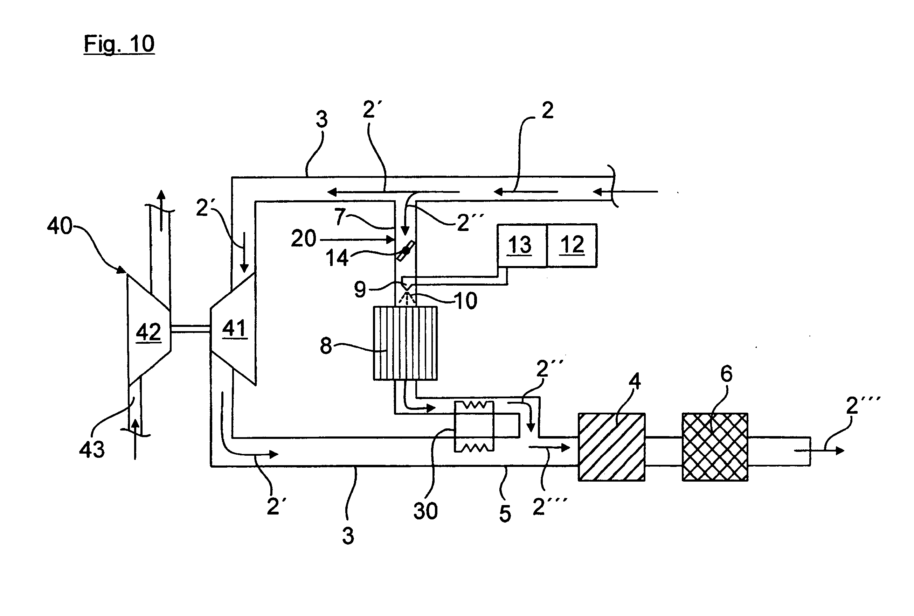

In der Fig. 10 ist ein vom Prinzip her der Ausgestaltung nach Fig. 3 entsprechender Aufbau gezeigt, so dass gleiche Bauteile mit gleichen Bezugszeichen bezeichnet sind und bezüglich der Gemeinsamkeit auf die diesbezüglichen Ausführungen zur Fig. 3 verwiesen wird. Im Unterschied zur Ausführungsform nach Fig. 3 ist in der Fig. 10 jedoch eine Ausgestaltung gezeigt, bei der eine Abgasturboladeranordnung 40 vorgesehen ist, die eine Abgasturbine 41 und einen Verdichter 42 aufweist. Der Verdichter 42 ist in üblicher Weise in einer zur hier nicht dargestellten Brennkraftmaschine geführten Luftzuführleitung 43 angeordnet, während die Abgasturbine 41 im Strömungsweg des von der Brennkraftmaschine kommenden Abgasstroms liegt.

Wie dies der Fig. 10 zu entnehmen ist, zweigt hier die Abzweigleitung 7 stromauf der Abgasturbine 41 ab, so dass der Hauptabgasstrom 2 in einen zur Abgasturbine 41 geführten Abgasstrom 2' und in einen über die Abzweigleitung 7 strömenden zweiten Abgasstrom 2" aufgeteilt wird. Diese Entnahme bzw. Abzweigung des zweiten Abgasstroms 2" stromauf der Abgasturbine hat den Vorteil, dass sich dieser zweite Abgasstrom 2" sich auf einem deutlich höheren Temperaturniveau befindet als der erste Abgasstrom 2' stromab der Abgasturbine 41. Wie dies der Fig. 10 weiter entnommen werden kann, ist in Verbindung mit einer derartigen Abgasturboiaderanordnung 40 vorteilhaft vorgesehen, dass der den HC-Oxidationskatalysator 8 durchströmende zweite Abgasstrom 2" stromauf des NO-Oxidationskatalysators 4 wieder dem kühleren ersten Abgasstrom 2' zugeführt wird, so dass ein insgesamt ausreichend heißer Abgasstrom 2'" durch den NO-Oxidationskatalysator 4 strömt und die Temperatur im NO-Oxidationskatalysator 4 auf ein solches Temperatur-niveau anhebt, dass die NO₂-Bildung im NO-Oxidationskatalysator 4 optimiert ablaufen kann.

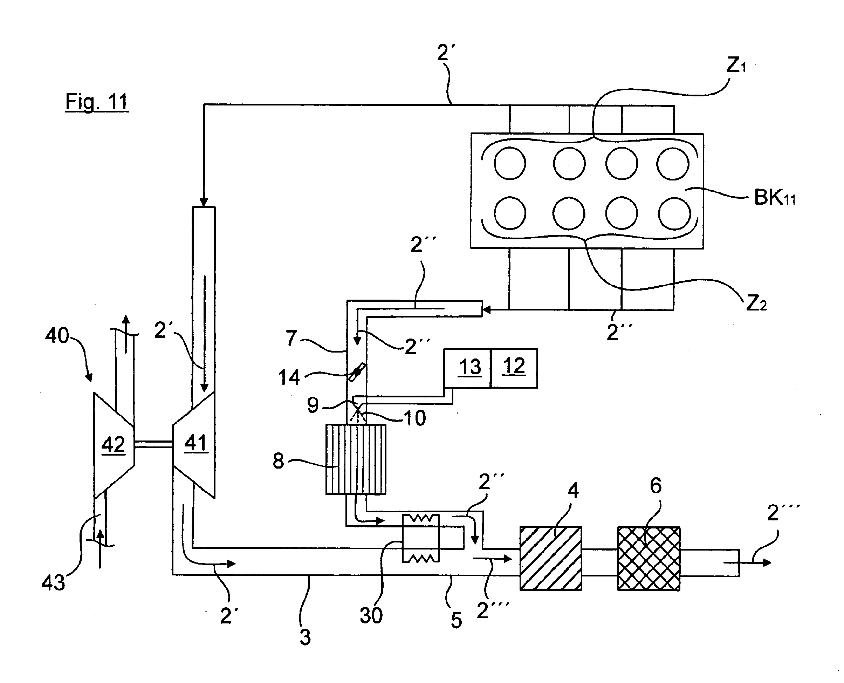

In der Fig. 11 ist eine Abwandlung der Ausgestaltung und Verfahrensführung nach Fig. 10 gezeigt, die im Wesentlichen derjenigen der Fig. 10 entspricht, jedoch mit dem Unterschied, dass hier analog zur Ausgestaltung gemäß der Fig. 3a der der Abgasturbine 41 zugeführte erste Abgasstrom 2' von einer ersten Zylindergruppe Z₁ einer Brennkraftmaschine BKM abgezweigt wird, während der zweite Abgasstrom 2" von einer zweiten Zylindergruppe Z₂ der Brennkraftmaschine BKM abgezweigt wird. Ansonsten entspricht der Aufbau demjenigen der Fig. 10.

Bei sämtlichen Ausführungsformen wird somit der Abgasstrom oder ein Teilabgasstrom über eine Heizeinrichtung geführt. Die dadurch zu erzielende Heizleistung ist allerdings, wie bereits zuvor beschrieben, durch die vorhandene Sauerstoffmenge limitiert. Um dies zu vermeiden, kann optional dem zu erhitzenden Abgasstrom nach Erreichen einer bestimmten vorgegebenen Temperatur und/oder einer vorgegebenen Zeit und/oder bei Unterschreiten eines vorgegebenen Lambda- oder Sauerstoffwertes, Frischluft zugeführt werden, zum Beispiel ein ladeluftseitig abgezweigter Frischluftstrom. Diese Frischluftzuführung 20 ist in den Fig. 3, 4, 5, 6 und 10 lediglich äußerst schematisch durch einen Pfeil dargestellt.

## Patentansprüche

1. Verfahren zur Regeneration eines im Abgastrakt einer Brennkraftmaschine angeordneten Partikelfilters, mit wenigstens einem stromauf des Partikelfilters angeordneten NO-Oxidationskatalysator zur Oxidation von NO, insbesondere zu NO₂, und mit wenigstens einer Heizeinrichtung zur Anhebung der Temperatur eines Abgasstroms, wobei mittels der wenigstens einen Heizeinrichtung (8) eine definierte Menge an thermischer Energie erzeugt wird, mit der die Temperatur des NO-Oxidationskatalysators (4) in einem definierten Temperaturbereich eingestellt wird,
**dadurch gekennzeichnet,**
- **dass** die thermische Energie unmittelbar oder mittelbar von der wenigstens einen Heizeinrichtung (8) ausgekoppelt wird und/oder dass die thermische Energie aus einem heißen Abgasstrom (2") stromab einer Heizeinrichtung (8) ausgekoppelt wird, und
- **dass** die ausgekoppelte thermische Energie unmittelbar oder mittelbar dem NO-Oxidationskatalysator (4) zugeführt wird und/oder dass die ausgekoppelte thermische Energie stromauf des NO-Oxidationskatalysators (4) in einen den NO-Oxidationskatalysator (4) durchströmenden Abgasstrom eingekoppelt wird.

2. Verfahren nach Anspruch 1, **dadurch gekennzeichnet, dass** der Temperaturbereich in Abhängigkeit von einem Beladungsgrad des Partikelfilters (6) mit Ruß und/oder von einem wirkungsgrad einer NO₂-basierten Regeneration des Partikelfilters (6) mittels einer am wenigstens einen NO-Oxidationskatalysator (4) gebildeten NO₂-Menge vorgegeben wird.

3. Verfahren nach Anspruch 1 oder 2, **dadurch gekennzeichnet, dass** die Temperatur des NO-Oxidationskatalysators (4) mittels einer Steuer- und Regeleinrichtung in einem Temperaturbereich von 250°C bis 380°C eingestellt wird.

4. Verfahren nach einem der vorhergehenden Ansprüche, **dadurch gekennzeichnet, dass** wenigstens während der Regenerationsphase, die insbesondere durch eine definierte Anhebung der Temperatur des NO-Oxidationskatalysators (4) charakterisiert ist, das Massenverhältnis zwischen dem im Abgas enthaltenen Kohlenstoff und Stickstoffdioxid stromauf des Partikelfilters mindestens 1:4, bevorzugt mindestens 1:8, beträgt.

5. Verfahren nach einem der vorhergehenden Ansprüche, **dadurch gekennzeichnet, dass** die wenigstens eine Heizeinrichtung (8) durch wenigstens einen Heizkatalysator, insbesondere durch wenigstens einen Katalysator zur Oxidation von Kohlenwasserstoffen, gebildet wird, der gegebenenfalls zusätzlich eine NO-Oxidationsaktivität aufweist, wobei bevorzugt vorgesehen ist, dass die Kohlenwasserstoffe, insbesondere Kraftstoff, stromauf der durch einen Katalysator zur Oxidation von Kohlenwasserstoffen gebildeten Heizeinrichtung (8) über eine Zudosiereinrichtung (9) in den Abgasstrom (2") zugegeben werden oder deren Anteil durch Verstellen von Zylinder-Betriebsparametern der Brennkraftmaschine in einem den jeweiligen Zylindern zugeordneten, und zur Heizeinrichtung (8) geführten Abgasstrom erhöht wird, wobei die Zuführung der Kohlenwasserstoff ein Abhängigkeit von definierten Zudosierparametern zu vorgegebenen Zeiten in vorgegebener Menge, insbesondere periodisch, erfolgt.

6. Verfahren nach einem der vorhergehenden Ansprüche, **dadurch gekennzeichnet, dass** die wenigstens eine Heizeinrichtung (8) strömungstechnisch parallel zu dem NO-Oxidationskatalysator (4) angeordnet ist, insbesondere dergestalt, dass die wenigstens eine Heizeinrichtung (8) und der NO-Oxidationskatalysator (4) von jeweils einem Abgas- bzw. Gasstrom (2', 2") durchströmt werden.

7. Verfahren nach einem der vorhergehenden Ansprüche, **dadurch gekennzeichnet, dass** ein erster. Abgasstrom (2') durch den NO-Oxidationskatalysator (4) und ein zweiter Abgasstrom (2") durch oder über die wenigstens eine Heizeinrichtung (8) strömt, wobei bevorzugt vorgesehen ist, dass die beiden Abgasströme (2', 2") stromab, gegebenenfalls auch stromauf bzw. stromauf und stromab, des NO-Oxidationskatalysators (4) und stromab der wenigstens einen Heizeinrichtung (8) sowie stromauf des Partikelfilters (6) zusammengeführt werden.

8. Verfahren nach einem der vorhergehenden Ansprüche, **dadurch gekennzeichnet, dass** der wenigstens zeitweise über die Heizeinrichtung (8) geleistete Abgasstrom (2") stromauf wenigstens einer Abgasturbine (41) entnommen und einem Abgasstrom (2') stromab der Abgasturbine (41) sowie stromauf, gegebenenfalls auch stromab bzw. stromauf und stromab, des NO-Oxidationskatalysators (4) zugeführt wird.

9. Verfahren nach Anspruch 7 oder 8, **dadurch gekennzeichnet, dass** die beiden Abgasströme (2', 2") strömungstechnisch mit unterschiedlichen Zylindern der Brennkraftmaschine verbunden sind, wobei für diesen Fall bevorzugt vorgesehen ist, dass durch Verstellen von Betriebsparametern, insbesondere Einspritzzeitpunkt und/oder Einspritzdruck und/oder Anzahl der Einspritzungen und/oder Saugdrosselstellung, derjenigen Zylinder, die strömungstechnisch mit dem Abgasstrom (2") verbunden sind, der durch einen Katalysator mit Kohlenwasserstoffoxidationsaktivität als Heizeinrichtung (8) strömt, definiert hohe Kohlenwasserstoffmengen stromauf dieses Katalysators erzeugt werden, oder dass alternativ zur strömungstechnischen Verbindung mit unterschiedlichen Zylindern vorgesehen ist, dass der eine Abgasstrom (2") stromauf des NO-Oxidationskatalysators (4) und/oder stromauf wenigstens einer Abgasturbine (41) mittels einer Abzweigleitung (7) von einer einen Hauptabgasstrom (2) führenden und zum NO-Oxidationskatalysator (4) geführten Zuführleitung (3) abgezweigt wird, so dass der erste Abgasstrom (2') über die Zuführleitung (3) weiter zum NO-Oxidationskatalysator (4) strömt.

10. Verfahren nach einem der vorhergehenden Ansprüche, **dadurch gekennzeichnet, dass** die thermische Energie aus dem heißen Abgasstrom (2") stromab der Heizeinrichtung mittels wenigstens eines Wärmetauschers (30) ausgekoppelt wird und/oder dass die thermische Energie in den, den NO-Oxidationskatalysator (4) durchströmenden Abgasstrom (2') über wenigstens einen Wärmetauscher (30) eingekoppelt wird und/oder dass die thermische Energie aus dem heißen Abgasstrom stromab der Heizeinrichtung (8) durch Abzweigung eines heißen Abgas-Teilstromes (2"") ausgekoppelt wird und/oder dass die thermische Energie stromauf des NO-Oxidationskatalysators (4) durch Einleitung eines heißen Abgasstroms (2"") in den zum NO-Oxidationskatalysator (4) geführten Abgasstrom (2') eingekoppelt wird und/oder dass der abgezweigte Abgas-Teilstrom (2"") vor dessen thermischer Einkopplung in den zum NO-Oxidationskatalysator (4) geführten Abgasstrom (2') über einen Katalysator zur Oxidation von Kohlenwasserstoffen(8") geführt wird.

11. Verfahren nach einem der Ansprüche 5 bis 10, **dadurch gekennzeichnet, dass** bei einer Ausbildung der Heizeinrichtung (8) als HC-Oxidationskatalysator, dem Kohlenwasserstoffe (HC) als Reduktionsmittel (10) zugeführt werden und bei einer Zudosierung einer definierten Menge eines heißen Abgasstroms (2"") in den zum NO-Oxidationskatalysator (4) geführten Abgasstrom (2'), zusätzlich eine Erfassungseinrichtung vorgesehen ist, mittels der die HC-Konzentration des, der NO-Oxidationseinrichtung (4) zugeführten Abgasstroms als HC-Mengen-Istwert erfasst wird, wobei diese Erfassungseinrichtung mit einer Steuer- und Regeleinrichtung dergestalt gekoppelt ist, dass in Kombination mit oder in Abhängigkeit von definierten Betriebsparametern, auch anstelle der Solltemperatur am NO-Oxidationskatalysator (4), ein definierter HC-Mengen-Sollwert vorgegeben wird, mittels dem die dem zur NO-Oxidationseinrichtung (4) geführten Abgasstrom zugeführte HC-Menge durch einen Sollwert-Istwert-Vergleich geregelt wird.

12. Verfahren nach einem der Ansprüche 5 bis 11, **dadurch gekennzeichnet, dass** die Heizeinrichtung durch wenigstens zwei in Serie geschaltete Heizkatalysatoren (8, 8'), insbesondere HC-Oxidationskatalysatoren, gebildet ist und die thermische Energie aus einem heißen Abgasstrom zwischen zwei Heizkatalysatoren (8, 8') und/oder von einem, stromauf gesehen, ersten Heizkatalysator (8) ausgekoppelt wird.

13. Verfahren nach einem der Ansprüche 1 bis 9, **dadurch gekennzeichnet, dass** der NO-Oxidationskatalysator (4) rohrförmig ausgebildet ist mit einer einen Strömungskanal ausbildenden durchgehenden Rohröffnung (24), und dass ein die Heizeinrichtung ausbildender Heizkatalysator (8) stromaufwärts so an eine Rohrmündung (23) der Rohröffnung (24) anschließt oder wenigstens teilweise formschlüssig in die Rohröffnung (24) eingeschoben ist, dass lediglich ein vorher den Heizkatalysator (8) durchströmender heißer Abgasstrom in die Rohröffnung (24) einströmt und über die Wandung der Rohröffnung (24) sowie gegebenenfalls die thermische Ankopplung des Heizkatalysators (8) an den NO-Oxidationskatalysator (4) thermische Energie an den NO-Oxidationskatalysator (4) übertragen wird.

14. Verfahren nach einem der vorhergehenden Ansprüche, **dadurch gekennzeichnet, dass** mittels der wenigstens einen Heizeinrichtung (8) ein zum Partikelfilter (6) geführter Abgasstrom (2"') auf eine definierte Temperatur aufgeheizt wird, wobei die Temperatur insbesondere in Abhängigkeit von einem Beladungsgrad des Partikelfilters (6) und/oder von einem Wirkungsgrad einer NO₂-basierten Regeneration des Partikelfilters (6) mittels einer am wenigstens einen NO-Oxidationskatalysator (4) gebildeten NO₂-Menge vorgegeben wird.

15. Verfahren nach einem der vorhergehenden Ansprüche, **dadurch gekennzeichnet, dass** mittels einer Steuer- und/oder Regeleinrichtung die, dem NO-Oxidationskatalysator (4) und/oder dem Partikelfilter (6) zugeführte Wärmemenge durch Veränderung der stromauf einer durch einen Katalysator zur Oxidation von Kohlenwasserstoffen gebildeten Heizeinrichtung (8) zugeführten oder im Abgasstrom (2") zu dieser eingestellten Kohlenwasserstoffmenge, insbesondere einer zugeführten Kraftstoffmenge, in Abhängigkeit von definierten Aufheizparametern, insbesondere in Abhängigkeit von einem Beladungsgrad des Partikelfilters (6) mit Ruß und/oder von einem Wirkungsgrad einer NO₂-basierten Regeneration des Partikelfilters (6) mittels einer am wenigstens einen NO-Oxidationskatalysator (4) gebildeten NO₂-Menge, gesteuert oder geregelt wird und/oder dass wenigstens eine mittels einer Steuer- und/oder Regeleinrichtung gekoppelte Absperreinrichtung (14) vorgesehen ist, mittels der die Menge des über die Abgasturbine (41) und/oder des über die Heizeinrichtung (8) geführten Abgasstroms (2', 2") in Abhängigkeit von definierten Absperr- und/oder Betriebsparametern gesteuert oder geregelt wird.

16. Verfahren nach einem der vorhergehenden Ansprüche, **dadurch gekennzeichnet, dass** eine vorzugsweise mittels eines Absperrorgans absperrbare Frischluftleitung (20) vorgesehen ist, mit der einem Abgasstrom stromauf der Heizeinrichtung (8) und/oder stromauf des NO-Oxidationskatalysators (4) zu vorgegebenen Zeiten und/oder bei Überschreiten einer vorgegebenen Abgastemperatur und/oder bei Unterschreiten eines vorgegebenen Lambdawerts und/oder bei Unterschreiten eines vorgegebenen Sauerstoffwerts eine vorgegebene Menge eines ladeluftseitigen Frischluftstroms und/oder eine vorgegebene Menge eines stromab der Einmündung einer Abgasrückführleitung in eine Ladeluftleitung abgezweigten Ladeluftstroms oder ein mit Hilfe eines Gebläses oder Verdichters geförderter Frischluftstrom zugeführt wird.

## Claims

1. Process for the regeneration of a particle filter arranged in the exhaust gas tract of a combustion engine having at least one NO-oxidation catalyst, which is arranged upstream of the particle filter, for the oxidation of NO, in particular to NO₂, and having at least one heating device for increasing the temperature of an exhaust gas flow, wherein a defined quantity of thermal energy is produced by means of the at least one heating device (8), with which the temperature of the NO-oxidation catalyst (4) is adjusted in a defined temperature region,
**characterised in that**,
- the thermal energy is directly or indirectly removed from the at least one heating device (8) and/or that the thermal energy from a hot exhaust gas flow (2") is removed downstream of a heating device (8), and
- that the removed thermal energy is supplied directly or indirectly to the NO-oxidation catalyst (4) and/or that the removed thermal energy is fed into an exhaust gas flow flowing through the NO-oxidation catalyst (4), upstream of the NO -oxidation catalyst (4).

2. Process according to claim 1, **characterised in that** the temperature region is predetermined depending on a load factor of the particle filter (6) with soot and/or on an efficiency factor of an NO₂-based regeneration of the particle filer (6) by means of a quantity of NO₂ formed on at least one NO-oxidation catalyst (4).

3. Process according to claim 1 or 2, **characterised in that** the temperature of the NO-oxidation catalyst (4) is adjusted in a temperature region of 250°C to 380°C by means of a control and regulation device.

4. Process according to one of the preceding claims, **characterised in that** at least during the regeneration phase, which is in particular **characterised by** a defined increase of the temperature of the NO-oxidation catalyst (4), the mass ratio between the carbon and nitrogen dioxide contained in the exhaust gas upstream of the particle filters amounts to at least 1:4, preferably at least 1:8.

5. Process according to one of the preceding claims, **characterised in that** the at least one heating device (8) is formed by at least one heated catalyst, in particular by at least one catalyst for the oxidation of hydrocarbons, which additionally has, if necessary, a NO-oxidation activity, wherein it is preferably provided that the hydrocarbons, in particular fuel, are added to the exhaust gas flow (2") upstream of the heating device (8), formed by a catalyst for the oxidation of hydrocarbons, via a metering device (9), or a proportion thereof is allocated in one of the respective cylinders by adjusting cylinder operating parameters of the combustion engine, and is increased to the exhaust gas flow leading to the heating device (8), wherein the supply of the hydrocarbon occurs dependent on defined metering parameters at predetermined times in a predetermined quantity, in particular periodically.

6. Process according to one of the preceding claims, **characterised in that** the at least one heating device (8) is arranged fluidically parallel to the NO-oxidisation catalyst (4), in particular in such a way that the at least one heating device (8) and the NO-oxidation catalyst (4) are flowed through by an exhaust gas or gas flow (2', 2") respectively.

7. Process according to one of the preceding claims, **characterised in that** a first exhaust gas flow (2') flows through the NO-oxidation catalyst (4) and a second exhaust gas flow (2") flows through or over the at least one heating device (8), wherein it is preferably provided that both exhaust gas flows (2', 2") are combined downstream, if necessary also upstream or upstream and downstream, of the NO-oxidation catalyst (4) and downstream of the at least one heating device (8) as well as upstream of the particle filter (6).

8. Process according to one of the preceding claims, **characterised in that** the exhaust gas flow (2"), which is at least temporarily guided over the heating device (8), is extracted upstream of at least one exhaust gas turbine (41) and an exhaust gas flow (2') is supplied downstream of the exhaust gas turbine (41) as well as upstream, if necessary also downstream or upstream and downstream, of the NO-oxidation catalyst (4).

9. Process according to claim 7 or 8, **characterised in that** both exhaust gas flows (2', 2") are fluidically connected to various cylinders of the combustion engine, wherein in this case it is preferably provided that high quantities of hydrocarbon are produced in a defined manner upstream of this catalyst by adjusting the operating parameters, in particular injection timing and/or injection pressure and/or number of injections and/or position of the interphase transformer, of those cylinders, which are fluidically connected to the exhaust gas flow (2"), which flows through a catalyst having hydrocarbon oxidation activity as a heating device (8), or that it is provided, as an alternative to the fluidic connection to various cylinders, that the one exhaust gas flow (2") is branched upstream of the NO-oxidation catalyst (4) and/or upstream of at least one exhaust gas turbine (41) by means of a branch line (7) of a supply line (3), supplying a main exhaust gas flow (2) and supplied to the NO-oxidation catalyst (4), such that the first exhaust gas flow (2') flows over the supply line (3) further to the NO-oxidation catalyst (4).

10. Process according to one of the preceding claims, **characterised in that** the thermal energy from the hot exhaust gas flow (2") is removed downstream of the heating device by means of at least one heat exchanger (30) and/or that the thermal energy is fed into the exhaust gas flow (2'), which flows through the NO-oxidation catalyst (4), via at least one heat exchanger (30) and/or that the thermal energy from the hot exhaust gas flow is removed downstream of the heating device (8) by branching of a hot exhaust gas partial flow (2"") and/or that the thermal energy is fed into the exhaust gas flow (2'), which is guided to the NO-oxidation catalyst (4), upstream of the NO-oxidation catalyst (4) by introduction of a hot exhaust gas flow (2""), and/or that before being thermally fed into the exhaust gas flow (2'), which is guided to the NO-oxidation catalyst (4), the branched exhaust gas partial flow (2"") is guided over a catalyst for the oxidation of hydrocarbons (8").

11. Process according to one of claims 5 to 10, **characterised in that** in the case of a formation of the heating device (8) as a HC-oxidisation catalyst, hydrocarbons (HC) are supplied as a reducing agent (10) and in the case of a metering of a defined quantity of a hot exhaust gas flow (2"") into the exhaust gas flow (2'), guided to the NO-oxidation catalyst (4), a detection device is additionally provided, by means of which the HC concentration of the exhaust gas flow supplied to the NO-oxidation device (4) is detected as HC quantity actual values, wherein this detection device is coupled to a control and regulation device in such a way that, combined with or dependent on defined operating parameters, a defined HC quantity target value is predetermined instead of the target temperature at the NO-oxidation catalyst (4), by means of which the HC quantity, which is supplied to the exhaust gas flow, which is guided to the NO-oxidation device (4), is regulated by a comparison of target value and actual value.

12. Process according to one of claims 5 to 11 **characterised in that** the heating device is formed by at least two heated catalysts (8, 8'), which are connected in series, in particular HC-oxidation catalysts, and the thermal energy is removed from a hot exhaust gas flow between two heated catalysts (8, 8') and/or from one, seen from upstream, first heated catalyst (8).

13. Process according to one of claims 1 to 9, **characterised in that** the NO-oxidation catalyst (4) is formed in a tubular manner, having a continuous pipe opening (24) forming a flow passage, and that a heated catalyst (8) forming the heating device connects upstream to a pipe mouth (23) of the pipe opening (24) or is at least partially positively inserted into the pipe opening (24), such that only a hot exhaust gas flow, which flows before the heated catalyst (8), flows into the pipe opening (24) and thermal energy is transferred to the NO-oxidation catalyst (4) via the wall of the pipe opening (24) as well as, if necessary, the thermal coupling of the heated catalyst (8) on the NO-oxidation catalyst (4).

14. Process according to one of the preceding claims, **characterised in that** an exhaust gas flow (2"'), which is guided to a particle filter (6), is heated to a defined temperature by means of at least one heating device (8), wherein the temperature is predetermined in particular depending on a loading factor of the particle filter (6) and/or on an efficiency factor of a NO₂-based regeneration of the particle filter (6) by means of a quantity of NO₂ formed on at least one NO-oxidation catalyst (4).

15. Process according to one of the preceding claims, **characterised in that** the heat quantity, supplied to the NO-oxidation catalyst (4) and/or to the particle filter (6), is controlled or regulated by a control and/or regulation device depending on defined heating parameters, in particular dependent on a loading factor of the particle filter (6) having soot and/or on an efficiency factor of an NO₂-based regeneration of the particle filter (6) by means of a quantity of NO₂, formed on at least one NO-oxidation catalyst (4), by an alteration of the quantity of hydrocarbon, in particular a supplied quantity of fuel, which is supplied upstream of a heating device (8), which is formed by a catalyst for the oxidation of hydrocarbons, or is adjusted to this in the exhaust gas flow (2"), and/or that at least one isolating device (14), coupled by means of control and/or regulation device, is provided, by means of which the quantity of the exhaust gas flow (2', 2"), guided via the exhaust gas turbine (41) and/or via the heating device (8) is controlled or regulated, dependent on defined isolation and/or operation parameters.

16. Process according to one of the preceding claims, **characterised in that** a fresh air line (20), which can be isolated, is provided preferably by means of a shut-off element, with which a predetermined quantity of a fresh air flow on the charged air side and/or a predetermined quantity of a branched charged air flow downstream of the confluence of an exhaust gas supply line into a charged air line or a fresh air flow supported with the help of a blower or a compressor, is supplied to an exhaust gas flow upstream of the heating device (8) and/or upstream of the NO-oxidation catalyst (4) at predetermined times and/or if a predetermined exhaust gas temperature is exceeded and/or if a predetermined Lambda value is fallen below and/or if a predetermined oxygen value is fallen below.

## Revendications

1. Procédé de régénération d'un filtre à particules disposé dans une ligne d'échappement d'un moteur à combustion, comportant au moins un catalyseur à oxydation de NO disposé en amont du filtre à particules pour l'oxydation du NO, en particulier en NO₂, et au moins un dispositif de chauffage(8), pour élever la température d'un courant de gaz d'échappement, dans lequel au moyen de l'au moins un dispositif de chauffage (8), une quantité définie d'énergie thermique est générée, avec laquelle la température du catalyseur à oxydation de NO (4) est ajustée dans une plage de températures définie
**caractérisé en ce que**
- l'énergie thermique est découplée directement ou indirectement de l'au moins un dispositif de chauffage (8) et/ou l'énergie thermique est découplée d'un courant de gaz d'échappement chaud (2") en aval d'un dispositif de chauffage (8), et
- l'énergie thermique découplée est acheminée directement ou indirectement au catalyseur à oxydation de NO (4) et/ou l'énergie thermique découplée est couplée en amont du catalyseur à oxydation de NO (4) dans un courant de gaz d'échappement traversant le catalyseur à oxydation de NO (4).

2. Procédé selon la revendication 1, **caractérisé en ce que** la plage de températures est prédéterminée en fonction d'un degré de chargement en suie du filtre à particules (6) et/ou en fonction d'un degré d'efficacité d'une régénération à base de NO₂ du filtre à particules (6) au moyen d'une quantité de NO₂ formée sur au moins un catalyseur à oxydation de NO (4).

3. Procédé selon la revendication 1 ou 2, **caractérisé en ce que** la température du catalyseur à oxydation de NO (4) est ajustée au moyen d'un dispositif de commande et de réglage dans une plage de températures de 250 °C à 380 °C.

4. Procédé selon l'une des revendications précédentes, **caractérisé en ce qu'**au moins pendant la phase de régénération, qui est caractérisée en particulier par une élévation définie de la température du catalyseur à oxydation de NO (4), le rapport massique entre le carbone contenu dans le gaz d'échappement et le dioxyde d'azote en amont du filtre à particules est d'au moins 1:4, de préférence, d'au moins 1:8.

5. Procédé selon l'une des revendications précédentes, **caractérisé en ce que** l'au moins un dispositif de chauffage (8) est formé par au moins un catalyseur chauffé, en particulier par au moins un catalyseur pour l'oxydation des hydrocarbures, qui présente éventuellement en outre une activité d'oxydation de NO, dans lequel il est prévu de préférence que les hydrocarbures, en particulier le carburant, soient ajoutés en amont du dispositif de chauffage (8) formé par un catalyseur pour l'oxydation des hydrocarbures par un dispositif d'ajout (9) dans le courant de gaz d'échappement (2") ou dont la proportion est affectée par un réglage des paramètres d'actionnement de cylindre du moteur à combustion à l'un des cylindres respectifs et le courant de gaz d'échappement acheminé pour le dispositif de chauffage (8) est augmenté, dans lequel l'apport d'hydrocarbure s'effectue en fonction des paramètres d'ajouts définis à des moments prédéterminés en quantité prédéterminée, en particulier périodiquement.

6. Procédé selon l'une des revendications précédentes, **caractérisé en ce que** l'au moins un dispositif de chauffage (8) est disposé parallèlement selon la technique des fluides au catalyseur à oxydation de NO (4), en particulier est conçu de telle sorte que l'au moins un dispositif de chauffage (8) et le catalyseur à oxydation de NO (4) soient traversés respectivement par un courant de gaz d'échappement ou un courant de gaz (2', 2").

7. Procédé selon l'une des revendications précédentes, **caractérisé en ce qu'**un premier courant de gaz d'échappement (2') s'écoule dans le catalyseur à oxydation de NO (4) et un deuxième courant de gaz d'échappement (2") s'écoule dans ou sur l'au moins un dispositif de chauffage (8), dans lequel il est prévu de préférence que les deux courants de gaz d'échappement (2', 2") soient réunis en aval, éventuellement également en amont ou en amont et en aval, du catalyseur à oxydation de NO (4) et en aval de l'au moins un dispositif de chauffage (8) et en amont du filtre à particules (6).

8. Procédé selon l'une des revendications précédentes, **caractérisé en ce que** le courant de gaz d'échappement (2") conduit au moins par moments sur le dispositif de chauffage (8) est retiré en amont au moins d'une turbine à gaz d'échappement (41) et est acheminé à un courant de gaz d'échappement (2') en aval de la turbine à gaz d'échappement (41) et en amont, éventuellement également en aval ou en amont et en aval, du catalyseur à oxydation de NO (4).

9. Procédé selon la revendication 7 ou 8, **caractérisé en ce que** les deux courants de gaz d'échappement (2', 2") sont reliés selon la technique des fluides à divers cylindres du moteur à combustion, dans lequel il est prévu, de préférence dans ce cas, qu'en réglant les paramètres de fonctionnement, en particulier le point d'injection et/ou la pression d'injection et/ou le nombre d'injections et/ou la position des bobines d'induction, des cylindres, qui sont reliés selon la technique des fluides au courant de gaz d'échappement (2") qui s'écoule dans un catalyseur ayant une activité d'oxydation des hydrocarbures en tant que dispositif de chauffage (8), des quantités élevées d'hydrocarbures définies en amont de ce catalyseur soient générées ou **en ce que**, en variante de la liaison selon la technique des fluides, avec différents cylindres il est prévu qu'un courant de gaz d'échappement (2") en amont du catalyseur à oxydation de NO (4) et/ou en amont au moins d'une turbine à gaz d'échappement (41) soit dérivé au moyen d'une conduite de dérivation (7) d'une conduite d'acheminement (3) conduisant un courant de gaz d'échappement principal (2) et conduisant au catalyseur à oxydation de NO (4) de sorte que le premier courant de gaz d'échappement (2') continue de s'écouler par la conduite d'acheminement (3) jusqu'au catalyseur à oxydation de NO.

10. Procédé selon l'une des revendications précédentes, **caractérisé en ce que** l'énergie thermique du courant de gaz d'échappement chaud (2") est découplée en aval du dispositif de chauffage au moyen au moins d'un échangeur de chaleur (30) et/ou que l'énergie thermique dans le courant de gaz d'échappement (2') traversant le catalyseur à oxydation de NO (4) est couplée par au moins un échangeur de chaleur (30) et/ou que l'énergie thermique du courant de gaz d'échappement chaud est découplée en aval du dispositif de chauffage (8) par dérivation d'un courant partiel de gaz d'échappement chaud (2"") et/ou que l'énergie thermique est couplée en amont du catalyseur à oxydation de NO (4) par acheminement d'un courant de gaz d'échappement chaud (2"") dans le courant de gaz d'échappement (2') acheminé au catalyseur à oxydation de NO (4) et/ou que le courant partiel de gaz d'échappement dérivé (2"") est acheminé avant son couplage thermique dans le courant de gaz d'échappement (2') conduit au catalyseur à oxydation de NO (4) sur un catalyseur pour l'oxydation d'hydrocarbures (8").

11. Procédé selon l'une des revendications 5 à 10, **caractérisé en ce que**, dans le cas d'une configuration du dispositif de chauffage (8) en tant que catalyseur à oxydation de HC, auquel on achemine des hydrocarbures (HC) comme agent de réduction (10) et lors d'un ajout d'une quantité définie d'un courant de gaz d'échappement chaud (2"") dans le courant de gaz d'échappement (2') acheminé au catalyseur à oxydation de NO (4), il est prévu en outre un dispositif de saisie au moyen duquel la concentration de HC du courant de gaz d'échappement acheminé au dispositif à oxydation de NO (4) est saisie en tant que valeur réelle des quantités de HC, dans lequel ce dispositif de saisie est couplé à un dispositif de commande et de réglage de telle sorte qu'en combinaison avec ou en fonction de paramètres de fonctionnement définis, également à la place de la température théorique du catalyseur à oxydation de NO (4), une valeur théorique définie des quantités de HC soit prédéterminée, au moyen de laquelle la quantité de HC acheminée au courant de gaz d'échappement conduit au dispositif à oxydation de NO (4) est réglée par une comparaison de la valeur théorique et de la valeur réelle.

12. Procédé selon l'une des revendications 5 à 11, **caractérisé en ce que** le dispositif de chauffage est formé par au moins deux catalyseurs chauffés (8, 8') montés en série, en particulier des catalyseurs à oxydation de HC et l'énergie thermique est découplée d'un courant de gaz d'échappement chaud entre deux catalyseurs chauds (8, 8') et/ou par un premier catalyseur chaud (8) vu en amont.

13. Procédé selon l'une des revendications 1 à 9, **caractérisé en ce que** le catalyseur à oxydation de NO (4) est de forme tubulaire et comporte une ouverture de tube (24) traversante formant un canal d'écoulement, et **en ce qu'**un catalyseur chaud (8) formant le dispositif de chauffage se raccorde en amont à une embouchure de tube (23) de l'ouverture de tube (24) ou est poussé au moins partiellement par complémentarité de forme dans l'ouverture de tube (24) de sorte que seul un courant de gaz d'échappement chaud traversant précédemment le catalyseur chaud (8) s'écoule dans l'ouverture de tube (24) et que sur la paroi de l'ouverture de tube (24) et éventuellement le couplage thermique du catalyseur chaud (8) sur le catalyseur à oxydation de NO (4) de l'énergie thermique soit transmise au catalyseur à oxydation de NO.

14. Procédé selon l'une des revendications précédentes, **caractérisé en ce qu'**au moyen du au moins un dispositif de chauffage (8), un courant de gaz d'échappement (2"') conduit au filtre à particules (6) est chauffé à une température définie, dans lequel la température est prédéterminée en particulier en fonction d'un degré de charge du filtre à particules (6) et/ou d'un degré d'efficacité d'une régénération à base de NO₂ du filtre à particules (6) au moyen d'une quantité de NO₂ formée sur au moins un catalyseur à oxydation de NO (4).

15. Procédé selon l'une des revendications précédentes, **caractérisé en ce qu'**au moyen d'un dispositif de commande et/ou de réglage, la quantité de chaleur acheminée au catalyseur à oxydation de NO et/ou au filtre à particules (6) est commandée ou réglée par modification de la quantité de carburant acheminée en amont d'un dispositif de chauffage (8) formé par un catalyseur à oxydation d'hydrocarbures ou dans le courant de gaz d'échappement (2") par rapport à cette quantité d'hydrocarbure ajustée, en particulier à une quantité de carburant acheminée en fonction de paramètres de chauffage définis, en particulier en fonction d'un degré de charge en suie du filtre à particules (6) et/ou d'un degré d'efficacité d'une régénération à base de NO₂ du filtre à particules (6) au moyen d'une quantité de NO₂ formée sur au moins un catalyseur à oxydation de NO (4) et/ou **en ce qu'**est prévu au moins un dispositif de blocage (14) couplé à un dispositif de commande et/ou de réglage au moyen duquel la quantité de courant de gaz d'échappement (2', 2") acheminée sur la turbine à gaz d'échappement (41) et/ou le dispositif de chauffage (8) est commandée ou réglée en fonction de paramètres définis de blocage et/ou de fonctionnement.

16. Procédé selon l'une des revendications précédentes, **caractérisé en ce qu'**est prévue une conduite d'air frais (20) pouvant être bloquée de préférence au moyen d'un organe de blocage par laquelle est acheminée à un courant de gaz d'échappement en amont du dispositif de chauffage (8) et/ou en amont du catalyseur à oxydation de NO (4) à des moments prédéterminés et/ou en cas de dépassement d'une température de gaz d'échappement prédéterminée et/ou en cas de dépassement d'une valeur lambda prédéterminée et/ou en cas de dépassement d'une valeur d'oxygène prédéterminée, une quantité prédéterminée d'un courant d'air frais du côté de l'air de charge et/ou une quantité prédéterminée d'un courant d'air de charge dérivé en aval de l'embouchure d'une conduite de réacheminement d'air dans une conduite d'air de charge ou un courant d'air frais acheminé à l'aide d'un ventilateur ou d'un compresseur.
